(19) Europäisches Patentamt / European Patent Office / Office européen des brevets

(11) EP 0 981 047 B1

(12) # EUROPEAN PATENT SPECIFICATION

(45) Date of publication and mention of the grant of the patent:
**26.03.2008 Bulletin 2008/13**

(51) Int Cl.:
***G01N 29/11*** *(2006.01)* ***G01N 29/22*** *(2006.01)*

(21) Application number: **99115135.8**

(22) Date of filing: **11.08.1999**

(54) **Method and apparatus for ultrasonic inspection of steel pipes**

Verfahren und Gerät für die Ultraschallprüfung von Stahlröhren

Procédé et appareil pour l'inspection par ultrasons de tubes en acier

(84) Designated Contracting States:
**DE**

(30) Priority: **12.08.1998 JP 22801598**
**25.09.1998 JP 27132698**

(43) Date of publication of application:
**23.02.2000 Bulletin 2000/08**

(60) Divisional application:
**07009949.4 / 1 818 674**
**07022499.3 / 1 882 923**

(73) Proprietor: **JFE Steel Corporation**
**Tokyo, 100-0011 (JP)**

(72) Inventors:
- **Hashimoto, Tatsuya**
**Kawasaki-ku,**
**Kawasaki 210 (JP)**
- **Iizuka, Yukinori**
**Kawasaki-ku,**
**Kawasaki 210 (JP)**
- **Matsufuji, Yasuhiro**
**Kawasaki-ku,**
**Kawasaki 210 (JP)**
- **Shimizu, Takeo**
**Kawasaki-ku,**
**Kawasaki 210 (JP)**

(74) Representative: **HOFFMANN EITLE**
**Patent- und Rechtsanwälte**
**Arabellastrasse 4**
**81925 München (DE)**

(56) References cited:
**US-A- 4 406 167** **US-A- 4 627 289**
**US-A- 4 821 575**

- **PATENT ABSTRACTS OF JAPAN vol. 012, no. 048 (P-666), 13 February 1988 (1988-02-13) & JP 62 194454 A (NIPPON STEEL CORP), 26 August 1987 (1987-08-26)**
- **PATENT ABSTRACTS OF JAPAN vol. 1997, no. 02, 28 February 1997 (1997-02-28) & JP 08 261992 A (NIPPON STEEL CORP), 11 October 1996 (1996-10-11)**
- **PATENT ABSTRACTS OF JAPAN vol. 012, no. 046 (P-665), 12 February 1988 (1988-02-12) & JP 62 192653 A (NIPPON STEEL CORP), 24 August 1987 (1987-08-24)**
- **PATENT ABSTRACTS OF JAPAN vol. 1995, no. 08, 29 September 1995 (1995-09-29) & JP 07 128305 A (TOSHIBA ENG & CONSTR CO LTD), 19 May 1995 (1995-05-19)**

EP 0 981 047 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

## Description

BACKGROUND OF THE INVENTION

1. Field of the Invention

The present invention relates to a method and an apparatus of ultrasonic inspection for inspecting a planar defect, which is generated in a welded part of a steel pipe, using angle probes attached to the outer peripheral surface of the steel pipe.

2. Description of Related Art

For example, a steel pipe having an outer diameter exceeding 1 m is manufactured by bending a steel plate into a cylindrical form, and then by welding side surfaces of the steel plate. The steel pipe manufactured by such a method may be referred to as a welded steel pipe since, as shown in Fig. 1(a), a linear welded part 3 extending in an axial direction exists on an outer peripheral surface 2 of a manufactured steel pipe 1.

In such a steel pipe 1, the probability of planar defect 4 caused by defective welding at the time of manufacture being generated in the welded plane including a radial direction (thickness direction) and an axial direction is increased.

As a method for inspecting the planar defect 4, an angle ultrasonic inspection method shown in Figs. 1(b) or Fig. 1(c) has been put into practice. Fig. 1(b) shows an inspection method in which an ultrasonic wave 6 generated in an angle probe 5 attached to the outer peripheral surface 2 of the steel pipe 1 is allowed to enter the planar defect 4 in the welded part 3 at a 0.25 skip; and Fig. 1(c) shows an inspection method in which the ultrasonic wave 6 is allowed to enter the planar defect 4 at a 0.75 skip. An angle which a direction of propagation of the ultrasonic wave 6 entered into the steel pipe 1 from the angle probe 5 forms with a perpendicular line of an incident surface is referred to as an inspection refractive angle θ. The refractive angle of the angle probe 5, which is generally used for inspection of the steel plate, is nominally 70°.

However, this angle ultrasonic inspection method causes the following problems in a practical use.

In the case of a steel pipe 1, such as an arc welded steel pipe, having the ratio of a thickness t to an outer diameter D, i.e., t/D, of 0.7-7 %, the ultrasonic wave 6 entered into the steel pipe 1 does not reflect from the bottom surface at the refractive angle θ of 70° when the t/D is 3 % or more. Therefore, at a 0.75 skip shown in Fig. 1(c), inspection of a refractive angle smaller than the nominal angle of 70°, such as 65°, 60°, or 55°, will be carried out. Consequently, in the case of inspection of the steel pipe 1 having t/D of about 6 %, the ultrasonic wave 6 does not enter perpendicularly to the planar defect 4 at a 0.75 skip, and therefore almost every ultrasonic wave 6 is not reflected by the planar defect 4 in the direction of the angle probe 5, whereby the defect-detection capability is lowered.

On the other hand, according to the inspection at a 0.25 skip shown in Fig. 1(b), as compared to the inspection at a 0.75 skip, the planar defect 4 and the angle probe 5 are located close to each other, so that the angle probe 5 can relatively strongly detect a defect signal. However, a strong ultrasonic wave 6 enters a weld metal part in the welded part 3, so that an echo reflected within the weld metal is observed as ultrasonic noise, and the high S/N ratio of the defective echo can hardly be obtained.

In a steel pipe 1 fabricated with a thin steel plate, it is feared that a holder for holding the angle probe 5 may contact the welded part 3, as shown in Fig. 1(b), so that the inspection cannot be conducted at a 0.25 skip.

Furthermore, the echo reflected from near the welded part 3 to return to the angle probe 5 includes not only a number of echoes from the planar defect 4 but also a number of echoes from an excess weld of the welded part 3, so that a defective echo alone cannot be detected at a high S/N ratio.

In recent years, since a control-rolled steel plate, such as a TMCP steel plate, is used for a welded steel pipe, acoustical anisotropy should be taken into account. A transverse sonic velocity of the ultrasonic wave of the steel pipe having such acoustical anisotropy is not always 3230 m/s, and the sonic velocity varies with the direction of propagation. Therefore, the actual inspection refractive angle is different from the nominal refractive angle, and it may be about 63° according to the acoustical anisotropy even if the angle probe having the nominal refractive angle of 70° is used. Therefore, the JIS Z 3060 for an ultrasonic inspection method of a steel welded part describes that, in inspecting a steel pipe having acoustical anisotropy, the angle proves as shown in Table 1 having rather small refractive angle θ should be selected and the inspection refractive angle should be determined in a following manner.

Table 1

| t/D (%) | Nominal refractive angle (degree) usable for test body having acoustical anisotropy |
|---|---|
| 2.3 or less | 65, (60), 45 |

(continued)

| t/D (%) | Nominal refractive angle (degree) usable for test body having acoustical anisotropy |
|---|---|
| above 2.3, but 4.0 or less | 65, 45 |
| above 4.0, but 13.0 or less | 45, 35 |

First, slit defects on the inner and outer surfaces are detected at a 0.5 skip and at a 1.0 skip, as shown in Fig. 2, and a distance $Y_L$ between the probes at a 0.5 skip is obtained from the positions $Y_Q$ and $Y_P$ as $Y_L = Y_Q - Y_P$. Then, the thickness t is divided by $Y_L$, and the inspection refractive angle is obtained using values of the vertical axis t/Yy, and the horizontal axis t/W (W represents a width of an oscillator) in Fig. 3.

In this way, according to a manual inspection, considerable labor is required to determine the inspection refractive angle. And since the probe having a nominal refractive angle smaller than 70° is used, the incident angle of the ultrasonic wave 6 relative to the planar defect 4 is further removed from an angle perpendicular to the planar defect 4 as compared to the case of inspection angle 70°, and the reflection of the ultrasonic wave 6 toward the probe is further reduced in a single probe inspection method, resulting in a low defect-detection capability.

On the other hand, in the case of an automatic inspection in the actual fabrication line of steel pipe, almost no countermeasure against the acoustical anisotropy is taken. An inspection is carried out at a refractive angle of 63° when the angle probe having the nominal refractive angle of 70° is used and the actual inspection angle is 63°, and an inspection is carried out at a refractive angle of 76° when the angle probe having the nominal refractive angle of 70° is used and the actual inspection angle is 76°. Therefore, when the inspection is carried out at the refractive angle of 63° using the angle probe manufactured so as to carry out an inspection at a refractive angle of 70°, beam directivity of the ultrasonic wave is lowered and an inspection range is narrowed. When the inspection is carried out at the refractive angle of 76°, the beam directivity of the ultrasonic wave is increased and the inspection range is extended. The analysis of inspection results is very complicated.

Japanese Unexamined Patent Publication No. 8-261992 discloses a method for accurately measuring an inspection refractive angle and an inspection position by obtaining sonic velocity variations in the inspection direction. However, an accurate propagation distance and an accurate propagation time in the steel pipe and the probe cannot be obtained in this method, which causes a problem of inspection accuracy.

Japanese patent application no. 62,194,454 A discloses a method for inspecting flaws in a welded steel pipe by performing accurate inspection of a welded part using ultrasound. A delay time is changed before and after the delay time determined by the outer diameter, wall thickness and desired angle of refraction of steel pipe to transmit and receive an ultrasonic wave and the delay time of the reflected wave from a welding bead tow is fixed to perform oblique angle flaw direction.

Japanese patent application JP 62,192,653 A discloses ultrasonic flaw detection for welded steel tube seams where vibrators are selected to be used for linear scanning corresponding to variation in distant between an array type probe and a weld seam.

Patent application US-A-4,821,575 discloses a method for ultrasonically detecting flaws in a welded portion of a pipe by using an ultrasonic wave phased array probe having a plurality of transducer elements and emitting and receiving ultrasonic wave beams. At least one monitoring probe is located in the vicinity of the welded portion to receive the ultrasonic wave beam. Peak values of the ultrasonic wave beams are detected within a predetermined gate, maximum peak value of the detected peak values is determined to determine a pilot beam having the maximum peak value, and effective beams which reach the portion of the welded portion to be tested are determined from the determined pilot beam.

## SUMMARY OF THE INVENTION

The present invention is achieved in consideration of the above circumstances, and an object is to provide a method and an apparatus of ultrasonic inspection, whereby it is possible to inspect planar defects existing in a welded part of a steel pipe with a high defect-detection capability and to easily and accurately to inspect them even for a steel pipe having acoustical anisotropy.

The present invention provides a method of ultrasonic inspection for inspecting a planar defect, existing in a plane including a radial direction and an axial direction in a welded part that exists in an axial direction of a steel pipe, using angle probes attached to the outer peripheral surface of the steel pipe, characterized in that an inspection refractive angle of an ultrasonic wave entered into the steel pipe from the angle probes is set to an angle at which the ultrasonic wave enters the planar defect perpendicularly based on the ratio of the thickness (t) to the outer diameter (D) of the steel pipe.

When the above method is applied to the steel pipe having acoustical anisotropy, the incident angle of the ultrasonic wave entered into the steel pipe from the angle probes should be set based on the velocity characteristic depending on the propagation direction of the ultrasonic wave in the steel pipe and the set inspection refractive angle.

BRIEF DESCRIPTION OF THE DRAWINGS

Fig. 1 (a) is a schematic diagram of a welded steel pipe having a defect in the welded part.
Fig. 1 (b) is an example of a general ultrasonic inspection method (0.25 skip) using an angle probe.
Fig. 1 (c) is another example of a general ultrasonic inspection method (0.75 skip) using an angle probe.
Fig. 2 is a diagram showing a conventional method for obtaining an inspection refractive angle.
Fig. 3 is a graph for obtaining the inspection refractive angle.
Fig. 4 is a diagram showing velocity distribution characteristics of an ultrasonic wave of an acoustical anisotropic material.
Fig. 5 is a diagram showing a reciprocating transmittance of an ultrasonic wave when entered obliquely.
Fig. 6 illustrates an example of an ultrasonic inspection method of the present invention.
Fig. 7 is a diagram showing the relationship between a refractive angle and an oscillator width required for an angle probe.
Fig. 8 is a waveform chart showing a chirped pulse signal applied to the angle probe.
Fig. 9 is a block diagram showing a schematic configuration of a FIR filter.
Fig. 10 is a diagram for the explanation of an operation of the FIR filter.
Fig. 11 shows a detailed configuration of the synchronous average response circuit.
Fig. 12 (a) shows noise echo waveforms made by a narrow band probe and a wide band probe at an inspection position 1.
Fig. 12 (b) shows noise echo waveforms made by a narrow band probe and a wide band probe at an inspection position 2.
Fig. 12 (c) shows noise echo waveforms made by a narrow band probe and a wide band probe at an inspection position 3.
Fig. 12 (d) shows noise echo waveforms made by a narrow band probe and a wide band probe at an inspection position 4.
Fig. 12 (e) shows the averaged noise echo waveforms of Figs. 12 (a) to (d).
Fig. 13 is a block diagram showing an embodiment of the present invention for a steel pipe having acoustical anisotropy.
Fig. 14 is a block diagram showing another embodiment of the present invention for a steel pipe having acoustical anisotropy.
Fig. 15 is a diagram showing an example of a method for measuring refractive angle dependency of the sonic velocity of a steel pipe having acoustical anisotropy.
Fig. 16 is a diagram showing a refractive angle dependency of the sonic velocity.
Fig. 17 is a schematic diagram showing a method for performing V scanning using linear array-type angle probes.
Fig. 18 is a diagram showing the L direction polarization and the C direction polarization of a transverse wave propagating in a thickness direction.
Fig. 19 is a diagram showing a state in which angle probes are opposed each other in parallel with the direction L to perform the V scanning.
Fig. 20 is a diagram showing the relationship between the differences of the refractive angles in the direction L and in the direction C at an inspection refractive angle of 70°.
Fig. 21 is a diagram showing the relationship between the differences of the refractive angles in the direction L and in the direction C at an inspection refractive angle of 60°.
Fig. 22 is a diagram showing a refractive angle dependency of the sonic speed.
Fig. 23 is a diagram showing a line focus-type angle probe.
Fig. 24 is a diagram showing a state in which the V scanning is performed using the line focus-type angle probe.

DETAILED DESCRIPTION OF THE INVENTION

In the present method of ultrasonic inspection, the inspection refractive angle θ, which is set to an angle at which the ultrasonic wave enters the planar defect perpendicularly based on the ratio of the thickness t to the outer diameter D of the steel pipe, is more specifically calculated by the following equation (1).

$$\theta = SIN^{-1} [1 - (t/D)] \qquad \cdots(1)$$

When the ultrasonic wave allowed to enter the steel pipe by the angle probe enters the planar defect of the welded part perpendicularly, the direction of propagation of a reflected wave from the planer defect becomes equal to the incident direction. Therefore, a defective echo can be detected most effectively by the angle probe. Furthermore, the inspection in this direction reduces the reflection of the ultrasonic wave caused by the excess weld of the welded part, whereby noise is effectively reduced.

Since the inspection refractive angle θ of the ultrasonic wave entered into the steel pipe is determined by the ratio of the thickness t and the outer diameter D, i.e., t/D of the steel pipe, it is necessary to use an angle probe in which an ultrasonic wave has an incident angle relative to the surface of steel pipe at which the ultrasonic wave causes refraction, and which has an oscillator in which the size of the ultrasonic beam after the refraction (apparent oscillator width) matches the size of the planar defect to be inspected.

In general, a transverse sonic velocity of an ultrasonic wave propagating in a steel is 3230 m/s, so that if the Snell's law is used, an angle probe having an incident angle to be used for inspection can be easily selected. The contraction rate of the oscillator in angle inspection can be calculated from the relationship between the incident angle and the refractive angle, so that the actual oscillator width can be calculated from the apparent oscillator width required for the inspection. However, a steel plate control-rolled to improve toughness at low temperatures has acoustical anisotropy, so that the sonic velocity of the ultrasonic wave is not always 3230 m/s in all the directions of propagation. In a steel plate having acoustical anisotropy, the sonic velocity of the ultrasonic wave (transverse wave) propagating in a plane in a direction perpendicular to a rolling direction (the direction C: in a plane orthogonal to the axial direction of the steel pipe) is distributed as shown in Fig. 4. That is, the velocity varies with the value of the refractive angle θ showing the direction of propagation of the ultrasonic wave. The velocity $V_\theta$ of the ultrasonic wave can be approximated by the following expression (2).

$$V_\theta=[(V_0 + V_{45})/2] + [(V_0 - V_{45})/2] \cdot COS(4\theta) \qquad \cdots(2)$$

wherein $V_0$ and $V_{45}$ are the sonic velocity when the refractive angle θ is 0° and 45°, respectively.

The expression (2) has two unknown variables, so that the sonic velocity can be determined by measuring sonic velocity at two different refractive angles. If the velocity distribution $V_\theta$ is determined, the inspection refractive angle θ can be determined from t/D of the steel pipe, so that the sonic velocity $V_\theta$ of the ultrasonic wave propagating in the inspection direction can be determined. Consequently, the incident angle of the ultrasonic wave allowed to enter the surface of the steel pipe from the oscillator can be calculated from the Snell's law. Therefore, the contraction rate of the oscillator in the angle inspection can be calculated from the values of the incident angle and the refractive angle, so that the oscillator width required for the inspection can be determined, whereby an angle probe most suitable for the inspection can be selected.

As described above, even if the steel pipe to be inspected has the acoustical anisotropy, the planar defect existing in the welded part can be accurately inspected.

In the above description, the incident angle is an angle formed by a direction of propagation of an ultrasonic wave in an angle probe and the normal of a steel pipe at an incident point of the ultrasonic wave, and the inspection refractive angle is an angle formed by a direction in which the ultrasonic wave immediately after entering the steel pipe propagates and the normal of the steel pipe at an incident point of the ultrasonic wave.

The acoustical anisotropy is fixed almost directly and exclusively by crystalline morphology of a steel pipe or manufacturing processes of the steel pipe, such as forming and heat treatment. Therefore, the most suitable angle probe can be determined by measuring refractive angle dependency of the sonic velocity in advance for each steel type and rolling condition, storing the data in a storage device after being tabulated or formulated, automatically calculating an incident angle corresponding to a refractive angle used in the inspection using the data of the refractive angle dependency at the time of inspection, and selecting an angle probe having the calculated incident angle.

The inspection can be easily conducted by measuring refractive angle dependency of the sonic velocity in advance for each steel type and rolling condition, storing the data in a storage device, automatically calculating an inspection refractive angle corresponding to the incident angle of the angle probe to be used and the sonic velocity in the angle probe using the data of the refractive angle dependency at the time of inspection, and from the calculated inspection refractive angle automatically calculating a setting position of the angle probe probe required for applying ultrasonic wave to a position to be inspected depending on the size of the steel pipe.

The angle probe to be selected usually has the incident angle corresponding to to the nominal refractive angle, so that the incident angle and the nominal refractive angle are in a one-to-one relationship and are equal to each other. Therefore, the nominal refraction angle can be also used instead of the incident angle.

Since the position where the maximum echo is detected corresponds to the center position of the ultrasonic wave, the propagated distance in the steel pipe can be accurately obtained by disposing two variable angle probes or array-type angle probes to oppose each other on the outer peripheral surface of the steel pipe with the same incident angle. Therefore, the more accurate inspection can be achieved by performing the V scanning using these angle probes, by repeating several times the measurement of the sonic velocity at the position where the maximum echo is obtained by varying the incident angle, and by measuring the refractive angle dependency of the sonic velocity.

The distance corresponding to the inspection refractive angle is a distance between an incident point of an ultrasonic wave and a point where the ultrasonic wave reflected from the underside has returned to the top side of the steel pipe when the ultrasonic wave enters the steel pipe to be inspected at the inspection refractive angle. Therefore, the refractive angle dependency of the sonic velocity can be also accurately obtained by disposing two variable angle probes or array-type angle probes to oppose each other on the outer peripheral surface of the steel pipe with the same incident angle and with the distance corresponding to the inspection refractive angle, V scanning, measuring the incident angle to detect the maximum echo by varying the incident angle, repeating several times the measurement of the sonic velocity using the Snell's law by varying the inspection refractive angle, and measuring the refractive angle dependency of the sonic velocity.

By disposing two line focus-type angle probes each having an oscillator bonded on the circumference of a semicircular wedge and setting an emergent point of ultrasonic wave as a focus to oppose each other on the outer peripheral surface of the steel pipe, the distances between all parts of the oscillator and the incident point on the steel pipe are equal. Therefore, by using such angle probes, the propagation route and the propagation time of the ultrasonic wave in the steel pipe can be accurately calculated when the sonic velocity is obtained by the V scanning, resulting an more accurate measurement of the refractive angle dependency of the sonic velocity.

The difference between the inspection refractive angle and the nominal refractive angle in the direction L (rolling direction) and in the direction C (direction perpendicular to the rolling direction) of the steel plate is in a certain relationship depending on the degree of the acoustical anisotropy. Therefore, only a measuring device operating one-dimensionally may be required, whereby the mechanism thereof is simplified, by measuring refractive angle dependency of the sonic velocity in the direction C from the sonic velocity ratio of two transverse waves propagating in a thickness direction and having different planes of polarization and the refractive angle dependency of the sonic velocity of a SV wave propagating in the direction L.

In order to measure the refractive angle dependency of the sonic velocity, it is necessary to measure the incident angle and the sonic velocity several times. However, it is difficult to carry out the measurement thoroughly at intervals of the same refractive angle. Thus, by subjecting the relationship between the refractive angle and the sonic velocity to regression by the periodic function of $\pi/2$ or $\pi$ and storing the function in a storage device, the relationship between the refractive angle and the sonic velocity can be determined successively and with a small number of parameters even in the place other than the measurement value. In addition, the capacity of the storage device can be reduced.

As a periodic function of $\pi/2$, the following expression (3) may be considered.

$$V_\theta = (a+b)/2 + (a-b) \cdot COS(4\theta)/2 \qquad \cdots(3)$$

By adding a higher-order periodic functions as in the following expressions (4) and (5), the regression accuracy can be improved.

$$V_\theta = (a+b)/2 + (a-b) \cdot COS(4\theta)/2 + c \cdot COS(8\theta) \qquad \cdots(4)$$

$$V_\theta = (a+b)/2 + (a-b) \cdot COS(4\theta)/2 + c \cdot COS(8\theta) + d \cdot COS(16\theta) \qquad \cdots(5)$$

Depending on the method for rolling a steel plate, the component of the period $\pi$ may appear, and some components of being out of phase by $\pi/2$ may appear, so that accurate regression may be effected by the following expressions (6) and (7).

$$V_\theta = (a+b)/2 + (a-b) \cdot COS(4\theta)/2 + e \cdot COS(2\theta) \quad \cdots(6)$$

$$V_\theta = (a+b)/2 + (a-b) \cdot COS(4\theta)/2 + e \cdot COS(2\theta) + f \cdot SIN(4\theta) \quad \cdots(7)$$

In the above equations, a to f are arbitrary constants.

The methods of the present invention can be realized by an apparatus of ultrasonic inspection for inspecting a planar defect, existing in a plane including a radial direction and an axial direction in a welded part that exists in an axial direction of a steel pipe, using angle probes attached to the outer peripheral surface of the steel pipe, characterized by comprising: an inspection refractive angle calculation means for calculating an inspection refractive angle of an ultrasonic wave entered into the steel pipe from the angle probes based on the ratio of the thickness to the outer diameter of the steel pipe; a distance calculation means for calculating a distance between the planar defect and the angle probes by the inspection refractive angle calculated by the inspection refractive angle calculation means and the outer diameter; and an angle probe supporting mechanism for supporting the angle probe at a position corresponding to the distance between the planar defect and the angle probes calculated by the distance calculation means.

In the apparatus, similarly to the above-described method for ultrasonic inspection, the inspection refractive angle θ is obtained by the above-described equation (1). Furthermore, when the ratio of the thickness t to the outer diameter D of the steel pipe is small, for example, 3 %, the probe-welded part distance PWD between the planar defect in the welded part and the angle probe is obtained by the following expression (8).

$$PWD = [(90 - \theta(deg))/360] \cdot D \cdot \pi \quad \cdots(8)$$

The angle probe is located so as to satisfy the thus calculated inspection refractive angle θ and the prove-welded part distance PWD, whereby the ultrasonic wave entered into the steel pipe is allowed to enter the planar defect perpendicularly, so that the S/N of a defective echo included in the echo signal output from the angle probe can be improved.

By adding to the apparatus an incident angle calculation means for calculating the incident angle of the ultrasonic wave in the angle probes relative to the steel pipe based on the velocity characteristic of the ultrasonic wave depending on the propagation direction due to acoustical anisotropy of the steel pipe and the calculated inspection refractive angle; and an oscillator width calculation means for calculating a width of an oscillator in the angle probes based on the contraction ratio of the oscillator obtained from the relationship between the calculated incident angle and the calculated inspection refractive angle, the incident angle is obtained from the above-described method, and the contraction rate of the oscillator by the angle inspection is obtained from the values of the incident angle and the refractive angle. The width of the oscillator is obtained from the contraction rate. Therefore, the oscillator width required for the inspection can be determined, whereby the angle probe most suitable for the inspection can be selected.

In an angle probe, in order to allow an ultrasonic wave to obliquely enter the surface of a steel pipe, a wedge formed of, for example, a acrylic resin is inserted between an oscillator and the surface of the steel pipe. As shown in Fig. 5, the reciprocating transmittance of the ultrasonic wave between the acrylic resin and the steel varies substantially depending on the refractive angle θ or the incident angle $\theta_i$. Therefore, when the angle inspection is carried out using the acrylic wedge, the inspection sensitivity varies according to the refractive angle θ of the ultrasonic wave. The inspection sensitivity is degraded as the refractive angle θ increases, so that it is necessary to electrically amplify the echo signal output from the angle probe. In general, however, not only echo signal but also electrical noise increases as the detected echo signal is passed through an electrical amplifier circuit, and the material noise from the weld metal in the welded part is also added, whereby the S/N is decreased.

The apparatus further comprising an angle probe driving means for applying a chirped pulse signal for sweeping frequencies within a predetermined pulse width to the angle probe for a fixed period; an A/D converter for A/D converting an echo signal output from the angle probe; and a digital filter for carrying out correlation calculation of the A/D converted echo signal using the chirped pulse signal, and for outputting the calculation result as a new echo signal makes it possible to maintain the. sufficiently high S/N even at a large refractive angle θ of 70° or larger, because non-periodic material noise and electrical noise other than the defective echo can be removed by subjecting an echo signal output from the angle probe in synchronism with the chirped pulse signal output for a fixed period, i.e., an echo signal in which a defective echo exists for a fixed period, to, for example, auto-correlation calculation using the digital filter.

The addition of a synchronous average response circuit for averaging the A/D converted echo signal for a plurality of periods in synchronism with the output period of the chirped pulse signal and outputting a new echo signal allows the signal level of the material noise and the electrical noise having no random periodicity to be decreased, whereby the S/N of the defective echo having high periodicity is increased.

The digital filter for carrying out correlation calculation of the A/D converted echo signal using the chirped pulse signal, and for outputting the calculation result as a new echo signal and the synchronous average response circuit circuit for averaging the A/D converted echo signal for a plurality of periods in synchronism with the output period of the chirped pulse signal and outputting a new echo signal can be also applied to the apparatus at the same time.

Another apparatus of ultrasonic inspection of the present invention comprises: a sonic velocity distribution storage means for storing refractive angle dependency of the sonic velocity for each type of the steel pipe and rolling condition; a means for inputting the steel type, the rolling condition and the inspection refractive angle; and an incident angle calculation means for calculating an incident angle from the input inspection refractive angle, the steel type, and the rolling condition using the data of the refractive angle dependency of the sonic velocity stored in the sonic velocity distribution storage means.

In this apparatus, when the inspection refractive angle, the steel type, and the rolling condition are input, the incident angle calculation means calculates an incident angle from the Snell's law using the data of the refractive angle dependency of the sonic velocity corresponding to these input values that are stored in the sonic velocity distribution storage means. Therefore, an angle probe by which a necessary inspection refractive angle can be obtained can be immediately selected, so that the time required for the inspection can be shortened. The data of the refractive angle dependency of the sonic velocity stored in the sonic velocity distribution storage means may be represented in a table form or in a form of regression expression.

Furthermore, an apparatus of ultrasonic inspection can be also applied to the present invention, which comprises: a sonic velocity distribution storage means for storing refractive angle dependency of the sonic velocity for each type of the steel pipe and rolling condition; a means for inputting the steel type, the rolling condition, the incident angle or the nominal refractive angle of the angle probe, and the sonic velocity in the angle probe; a means for inputting the size of the steel pipe; a refractive angle calculation means for calculating an inspection refractive angle from the input steel type, rolling condition, incident angle or the nominal refractive angle of the angle probe, and the sonic velocity in the angle probe using the data of the refractive angle dependency of the sonic velocity stored in the sonic velocity distribution storage means; and an angle probe position calculation means for calculating a setting position of the angle probe from the calculated inspection refractive angle and the input size of the steel pipe.

In this apparatus, when the steel type, the rolling condition, the incident angle (or the nominal refractive angle) of the angle probe, and the sonic velocity in the angle probe are input, the refractive angle calculation means calculates the inspection refractive angle using the data of the refractive angle dependency of the sonic velocity stored in the sonic velocity distribution storage means. Then, the angle probe position calculation means calculates the setting position of the angle probe for applying ultrasonic waves to a inspection position from the calculated inspection refractive angle and the input size of the steel pipe. By setting the angle probe at the calculated angle probe setting position, the inspection on the inspection position can be carried out. The angle probe setting may be set automatically or manually.

Example 1

Fig. 6 illustrates an example of an ultrasonic inspection method of the present invention.

An angle probe selection calculator 11 calculates an inspection refractive angle θ, using the above-described equation (1), suitable for inspecting a planar defect 4 expanding in the thickness direction and the axial direction of a steel pipe 1 in a welded part 3 according to the thickness t and the outer diameter D of the steel pipe 1 to be inspected obtained from a host computer 13, and selects an angle probe 5 used for enabling the inspection at the refractive angle θ. An incident angle i of an ultrasonic wave 6 relative to the outer peripheral surface 2 of the steel pipe 1 is calculated by the following expression (9).

$$SIN(\theta_i)/V_W = SIN(\theta)/V \qquad \cdots(9)$$

wherein $V_w$, and V represent a longitudinal sonic velocity of the ultrasonic wave in a wedge, and a transverse sonic velocity in the steep pipe 1, respectively.

When the steel pipe 1 has acoustical anisotropy, since the transverse sonic velocity V varies with the direction of propagation, it is represented by a function $V_\theta$ of the refractive angle θ, as described in Fig. 4. Therefore, the following expression (10) is used instead of the above-described expression (9) for the calculation of the incident angle $\theta_i$.

$$SIN(\theta_i)/V_W = SIN(\theta)/V_\theta \quad \cdots(10)$$

The width W of the oscillator required for the inspection depends on the spread of the directivity of the ultrasonic wave 6. When the oscillator in the angle probe 5 is viewed from the inside of the steel pipe 1, the oscillator is seen with an apparent width Wa, not with an actual width W. The apparent width Wa of the oscillator is calculated by the following equation (11).

$$Wa = F \cdot W \quad \cdots(11)$$

wherein F is a contraction rate of the oscillator and can be calculated by the following expression (12).

$$F = COS(\theta)/COS(\theta_i) \quad \cdots(12)$$

On the other hand, the ultrasonic wave 6 is diffracted in the steel pipe 1 as if it were generated from the oscillator of the apparent width Wa, and has an angle of spread $\phi_{-6}$ represented by the following expression (13).

$$\phi_{-6} = SIN^{-1}\,[0.433\ \lambda/Wa] \quad \cdots(13)$$

wherein $\phi_{-6}$ represents a direction in which an echo signal detected by the single probe method is reduced to half of the maximum value, and λ represents a wave length.

By considering these matters conversely, the actual oscillator width W for allowing an ultrasonic beam to spread for the inspection can be calculated.

Fig. 7 shows an oscillator width required for changing a -6 dB angle of $\phi_{-6}$ of the ultrasonic wave in the steel pipe 1 from the maximum value to 4.6°. The refractive angle θ is plotted in the horizontal axis, and the data are illustrated by a sonic velocity every 100 m/s.

The angle probe selection calculator 11 outputs the calculated refractive angle θ, incident angle $\theta_i$, and the actual oscillator width W to be displayed on a display 12 and to be sent to a PWD (probe-welded part distance) calculator 14.

When the steel pipe 1 has the thickness t of 22.2 mm, and the outer diameter D of 1320.8 mm, the inspection refractive angle θ is 79.5°. In addition, as shown in Fig. 4, the sonic velocity $V_{79.5}$ of the ultrasonic wave 6 propagated in the direction of the refractive angle θ by the acoustical anisotropy is 3100 m/s. Since the sonic velocity of the wedge (acrylic) incorporated into the angle probe 5 is 2730 m/s, the incident angle $\theta_i$ is 60°. Furthermore, the width W of the oscillator required for changing the angle of spread $\phi_{-6}$ to 4.6° is about 12 mm from Fig. 7. Then, the angle probe 5 having the incident angle $\theta_i$ of 60° and the oscillator width W of 12 mm is selected among a plurality of previously prepared angle probes having various incident angles i, and attached to a holder 17 for the angle probe 5.

The operation for selecting and attaching the angle probe 5 may be automated by employing an automatic variable angle probe for the angle probe 5.

The PWD calculator 14 determines the position of the angle probe 5 as follows from the values of the inspection refractive angle θ, thickness t, and outer diameter D transferred from the angle probe selection calculator 11.

The position of the angle probe 5 in the case where the planar defect 4 caused by the insufficient dissolution in the welded part 3 of the steel pipe 1 is inspected by the angle probe 5 is represented by the probe-welded part distance PWD and is obtained by the above-described expression (8). Substituting the above-described values D of 1320.8 mm and θ of 79.5° yields the PWD of 121 mm.

The value of the PWD calculated by the PWD calculator 14 is transferred to a manipulator 15. The manipulator 15 positions and fixes the holder 17 so that the ultrasonic wave 6 enters from the angle probe 5 into the steel pipe 1 at a position of PWD of 121 mm from the center of the welded part 3 detected by a welding seam detector 16.

By determining the position of the angle probe 5 relative to the welded part 3 in this way, the ultrasonic wave 6 propagated in the steel pipe 1 enters the planar defect 4 in the welded part 3 perpendicularly.

As will be understood from a reciprocating transmittance characteristic diagram of Fig. 5, the steel pipe 1 to be inspected in this example causes desensitization by -3 dB as compared with the conventional angle inspection of 70° because the inspection refractive angle θ is a large 79.5°. For this reason, in Fig. 6, a correlation calculation technique using a chirped pulse signal and a synchronous average response technique are employed, and an echo signal is amplified by an amplifier circuit without increasing noise so as to prevent the desensitization.

A description will be given of the signal processing technique.

Referring to Fig. 6, a synchronizing signal generator 18 transmits a transmission timing signal Sa having a transmission period To to a transmitting storage unit 19, a FIR filter 26, and a synchronous average response circuit 27. A waveform calculator 20 generates a chirped wave for sweeping frequencies within a predetermined pulse width T and supplies the chirped wave to the transmitting storage unit 19 and the FIR filter 26, as shown in Fig. 8. The chirped wave is calculated by a computer, and is represented by the following expression (14).

$$s(t) = \mathrm{SIN}\ [2\pi \{f_C - B/2 + (B/2T)t\}\ t] \qquad 0<t<T \qquad \cdots(14)$$

wherein $f_c$ represents a center frequency, B represents a frequency sweep bandwidth, and T represents a pulse width.

The chirped wave stored in the transmitting storage unit 19 is read out in synchronism with the transmission timing signal Sa having the period To from the synchronizing signal generator 18, converted into an analog signal by a D/A converter 21, amplified by a transmitting amplifier 22, and applied as a chirped pulse signal Sb having the period of To to the angle probe 5 via a diplexer 23.

The ultrasonic wave 6 entered into the steel pipe 1 from the angle probe 5 via an acoustic contact medium, such as water, is reflected by the planar defect 4 in the welded part 3 so as to be received by the angle probe 5 again. An echo signal Sc output from the angle probe 5 is amplified by a receiving amplifier 24 via the diplexer 23, converted by an A/D converter 25 into a digital signal, and input to the synchronous average response circuit 27 passing through the FIR filter 26 serving as a digital filter.

The FIR filter 26 is, as shown in Fig. 9, composed of 128 multipliers 26a, 128 adders 26b, and 128 delay units 26c. Signals of chirped waveform generated by the waveform calculator 20 are set as reference data to coefficients $C_0$ to $C_{127}$ that are applied to respective multipliers 26a of the FIR filter 26. The respective delay units 26c delay the input signals by the time equivalent to the transmission period To and output them.

In the FIR filter 26 constructed as described above, the waveform x(τ) of the echo signals Sc separated into digital signals and the reference waveform for carrying out the correlation calculation are sampled at a fixed sampling frequency. In this example, respective discrete data values are input as 128 coefficients $C_0$ to $C_{127}$ to one of the multipliers 26a.

On the other hand, discrete received data x(τ) input from an input port for every transmission period To are directly supplied to the other of the multipliers 26a so as to be individually multiplied by the reference data $C_0$ to $C_{127}$. Multiplication results except a multiplication result with the initial coefficient $C_{127}$ are supplied to one of the 127 adders 26b connected alternately to 127 delay units 26c in series. Then, only the multiplication result with the initial coefficient $C_{127}$ is directly supplied to the initial delay unit 26c, and a multiplication result with the coefficient $C_{126}$ is supplied to the other of the adders 26b connected in series to a subsequent stage of the delay unit 26c. The output of the final adder 26b in the series connection is a correlation calculation output y(τ).

Now, if the input signal is taken as $X_{i(j)}$, the coefficient is taken as $C_{(K)}$, the output signal is taken as $y_{i(j)}$, the number of taps is taken as $V_c$, the repetition of the inspection signal is taken as i, and the number of inspection signal data scores in one period as n, the output signal $y_{i(j)}$ can be obtained by carrying out a convolution calculation of the following expression (15).

$$y_{i(j)} = \sum_{k=0}^{Nc-1} c_{(k)} \cdot x_{i[j-k]} \qquad -\infty \le i \le \infty,\ 0 \le j \le n \qquad \cdots(15)$$

If the order of the reference signals is reversed in the expression (15), the following expression (16) is obtained.

$$y_{i(j)} = \sum_{k=0}^{Nc-1} C_{(-k)} \cdot x_{i[j+k]} \quad -\infty \le i \le \infty,\ 0 \le j \le n \qquad \cdots(16)$$

Consequently, the correlation calculation of the echo signal Sc can be carried out using the FIR filter 26. The correlation operation calculates the cross-correlation of the reference signal and the receiver signal while shifting them by the amount of j.

A specific operation of the FIR filter 26 will be described below.

Referring to Fig. 10, the point of the time $\tau_1$ corresponds to a position where j is zero in the above-described expressions (15) and (16). First, the correlation calculation of the receiver signal and the reference signal is carried out at the position $\tau_i$ by the data of 0 to $N_{c-1}$. Here, $N_c$ represents a tap length of the FIR filter 26, i.e., the number of the coefficients $C_0$ to $C_{127}$. The result of correlation is output as a lowermost signal in the drawing, i.e., a new echo signal Sd. The reference signal and the receiver signal (echo signal) are not similar to each other at the point $\tau_i$, so that the output is almost zero. Next, j is incremented one by one to sequentially carry out calculations, as $\tau_2$, $\tau_3$, ... in the drawing. As a result, a correlation signal having a maximum peak can be obtained at a point where the echo in the receiver signal matches the phase of the reference signal. Consequently, the pulse width of the chirped wave is compressed, and an electrical noise signal that is not correlated to the reference signal is substantially reduced.

The echo signal Sd of which the pulse is compressed by the correlation processing in the FIR filter 26 is subjected to the synchronous average response processing by the synchronous average response circuit 27.

Fig. 11 shows a detailed configuration of the synchronous average response circuit.

The synchronous average response circuit 27 is briefly composed of a first storage unit 28, an adder 29, a write and read address generators 30a and 30b for the first storage unit 28, a subtractor 31, a second storage unit 32, a write and read address generators 33a and 33b for the second storage unit 32, and a subtractor 34. The first storage unit 28 has the capacity for storing the data of more than N+1 period of the receiver signal (echo signal Sd) received from the FIR filter 26 at every transmission period To of the transmission timing signal Sa from the synchronizing signal generator 18. In this example, the receiver signal of every period contain M pieces of data, and each of the data is composed of 8 bits. The second storage unit 32 has the capacity for storing M pieces of the sum data obtained by adding M pieces of data in each receiver period To individually by N periods. In this example, M pieces of 16-bit data are stored.

In an initial state where no receiver signal is input from the FIR filter 26, nothing is stored in the first and second storage units 28 and 32. When a receiver signal of the first period $T_0$ is input, the receiver signal is stored in an initial area of the first storage unit 28, and is added to one of the adder 29. In the first period, nothing is stored in an area of the first storage unit 28 designated by a signal read address $RA_1$ and in the second storage unit 32. Thus, the receiver signal added to one of the adder 29 passes through the adder 29 and passes by the subtractor 31 so as to be stored in the second storage unit 32. When a receiver signal of the second period $T_0$ is input, the receiver signal of the second period and the receiver signal of the previous period stored in the second storage unit 32 are added by the adder 29. The result of addition passes by the subtractor 31 so as to be stored in the second storage unit 32. The second receiver signal is also stored in the second area in the first storage unit 28. Until the average of N periods of the receiver signals are input, the sequential addition of the receiver signal to the second storage unit 32, and the operation for sequentially storing the receiver signal in the corresponding area of the first storage unit 28 are continued. When the average of N periods or more of the receiver signals are input, the receiver signal before an N period of the newly input receiver signal is read out of the area designated by the signal read address $RA_i$ of the first storage unit 28, and is supplied as a subtracting signal to the subtractor 31. Therefore, the signal stored in the second storage unit 32 and the newly input receiver signal are added by the adder 29. When the result of addition is output, the receiver signal before an N period that is read out of the first storage unit 28 is subtracted by the subtractor 31 from the result of addition, so that the output signal of the subtractor 31 is always a signal to which N periods of the receiver signals are added. Since the result of addition of the N periods of receiver signals is stored in the second storage unit 32 and is input into the divider 34 so as to be divided by N, the result of synchronous average response of the N periods of receiver signals is output from the divider 34 to a display 35 as a new echo signal Se for every transmission period To of the ultrasonic wave pulse. As a timing signal supplied to the write address generators 30a and 33a, and read address generators 30b and 33b for storing and reading the receiver signal, the transmission timing signal Sa supplied from the synchronizing signal generator 18 is used.

By employing the thus constructed synchronous average response circuit 27, the echo signal is averaged in synchronism with the output period of the chirped pulse signal for a plurality of periods, whereby the signal level of random and non-periodic noise or electrical noise is decreased, and the signal level of periodic defective echo is increased. More specifically, in the ultrasonic inspection apparatus as shown in Fig. 6, since pulse compression of the chirped wave is used, a wide band angle probe 5 for enabling transmission and receipt of the ultrasonic wave 6 of wide frequency band is used. As a result, a transmission pulse width is short. Therefore, a noise echo that is reflected and is allowed to interfere due to surface state can be changed per one pulse more greatly. Consequently, by subjecting the signal to synchronous average response processing, the noise echo can be reduced as compared with the case of a narrow band probe. Therefore, the S/N of the defective echo can be substantially improved.

Figs. 12(a) to 12(d) show waveforms made by the narrow band probe and the wide band probe when the inspection position is changed 1 to 4 (different surface states). Fig. 12(e) shows waveforms obtained by averaging the waveforms of Figs. 12(a) to 12(d). In this way, the S/N ratio can be improved by averaging the echo signal Sd.

Example 2

Fig. 13 is a block diagram showing an example of the present invention.

In a sonic velocity distribution storage means 37, data showing the relationship between a refractive angle and sonic velocity measured by a method to be described later are stored for each steel type of a steel pipe and rolling condition. A method for storing the data may be in the form of associated table of the refractive angle and the sonic velocity, or the sonic velocity may be represented as a function of the refractive angle.

In carrying out inspection, when an inspection refractive angle, a steel type, and a rolling condition to be used in the inspection are determined, they are input from an inspection refractive angle, steel type, and rolling condition input means 36. They may be set by a human being, or may be preset by a host computer or the like. When their values are input, an incident angle calculation means 38 searches data corresponding to the values from the data stored in the sonic velocity distribution storage means 37, and calculates the sonic velocity in the steel pipe corresponding to the inspection refractive angle. Then, an incident angle is calculated from the sonic velocity in the steel pipe, the sonic velocity in the angle probe, and the inspection refractive angle using the Snell's law.

The calculated incident angle is displayed to an operator, and the operator selects an angle probe having a corresponding incident angle and an angle of spread of an ultrasonic wave required for the inspection, and sets it to an inspector. An automatic probe-exchanging device may be installed so that an angle probe having the calculated incident angle may be automatically set to the inspector. The angle of spread of the ultrasonic wave required for the inspection may be automatically calculated by a known method.

In this example, since the inspection refractive angle is known in advance, the setting position of the angle probe for irradiating a site to be inspected with ultrasonic wave can be easily obtained from the geometrical relationship between the inspection refractive angle and the size of the steel pipe.

Example 3

Fig. 14 is a block diagram showing another example of the present invention.

In this example, an angle probe to be used is determined in advance and hence, an incident angle and a sonic velocity in an angle probe are already known. It is quite usual that an angle probe having an incident angle corresponding to the fixed nominal refractive angle is used.

As in the case of the above Example 2, data showing the relationship between the refractive angle and the sonic velocity are stored for each steel type and rolling condition in the sonic velocity distribution storage means 37. In carrying out inspection, an incident angle of an angle probe, a sonic velocity in the angle probe, a steel type of a steel pipe, and a rolling condition are input by an incident angle, sonic velocity in the angle probe, steel type, and rolling condition input means 39. A refractive angle calculation means 41 receives the input, and calculates an inspection refractive angle using the data stored in the sonic velocity distribution storage means 37. The data stored in the sonic velocity distribution storage means 37 show the relationship between the refractive angle and the sonic velocity. Therefore, in order to obtain the inspection refractive angle, a refractive angle satisfying simultaneously the relationship and the Snell's law is obtained by a repetitive convergent calculation.

When the inspection refractive angle is obtained, an angle probe position calculation means 42 calculates a position of the angle probe required for irradiating a site to be inspected with ultrasonic wave from the inspection refractive angle and the size of the steel pipe input from a steel pipe size input means 40. The calculation may be easily performed based on the geometrical relationship.

Example 4

An example of a method for measuring refractive angle dependency of the sonic velocity of a steel pipe having acoustical anisotropy will be described with reference to Fig. 15.

Two variable angle probes 5a and 5b each having an acrylic wedge are disposed to oppose each other. In this case, the distance Y between the variable angle probes 5a and 5b is located at one skip and at a refractive angle of 35°. The refractive angle may be less than 35°, but may preferably be a longitudinal critical angle or larger because a longitudinal wave and a transverse wave may be generated simultaneously. The angle probes can be located at 2 skips or more. However, when a beam path length is prolonged, a beam divergence is increased. In this case, beam directivity may preferably be increased by widening an oscillator width of the angle probe. If a variable angle probe in which incident point is fixed even if the incident angle is changed is used for the variable angle probes 5a and 5b, a propagation route of the ultrasonic wave can be easily calculated, whereby the refractive angle can be easily and accurately measured.

The distance Y between the probes at one skip is represented by the following expression (17) using the outer diameter D, the inner surface incident angle $\theta_i$, and the refractive angle $\theta$.

$$Y = 2\pi \cdot D \cdot (\theta_i - \theta)/360 \qquad \cdots(17)$$

In addition, the inner surface incident angle $\theta_i$ is obtained by the following expression (18) from the refractive angle $\theta$, the outer diameter D, and the thickness t.

$$\theta_i = SIN^{-1}\,[SIN(\theta)/(1 - 2t/D)] \qquad \cdots(18)$$

If t is 22.2 mm and D is of 1320.8 mm, Y is 32.3 mm and $\theta_i$ is 36.4° by the above-described expressions (17) and (18).

Next, at the positions of the probes as described above, the incident angles of both of the probes are changed simultaneously while transmitting ultrasonic waves from the transmitting variable angle probe 5a and receiving the ultrasonic waves by the receiving variable angle probe 5b, so as to determine the incident angle $\theta_2$ from the probes at which a received echo is maximized.

Then, the sonic velocity $V_{35}$ at the positions is obtained using the following expression (19) of the Snell's law.

$$SIN(\theta_2)/V_{wedge} (= 2730) = SIN\ (\theta = 35)/V_{35} \qquad \cdots(19)$$

wherein $V_{wedge}$ is the sonic velocity in the transmitting variable angle probe 5a.

In this example, $V_{35}$ is 3295 m/s. Similarly, the sonic velocity $V_{36}$, $V_{37}$, $V_{38}$ ... are obtained to repeat measurements near an angle $\theta_{lim}$ at which the inner surface incident is not caused. The angle at which inner surface incident is not caused is obtained by substituting $\theta_i$ of 90 in the expression (18) and by solving with $\theta$. This is represented by the following expression (20).

$$\theta_{lim} = SIN^{-1}\ (1 - 2t/D) \qquad \cdots(20)$$

In the case of this example, $\theta_{lim}$ is 75.1°

From the results obtained, the sonic velocity distribution (refractive angle dependency of the sonic velocity) shown in Fig. 16 can be drawn. An SV wave polarizing in the thickness direction and propagating in the direction C has a sonic wave $V_0$ that is minimized when propagating in the thickness direction, and a sonic wave $V_{45}$ that is maximized when propagating in a direction to form an angle of 45° with the thickness direction, so that the sonic velocity can be approximated by the above-described expression (2). Therefore, the sonic velocity distribution as shown in Fig. 4 is obtained. In this case, if the sonic velocity $V_0$ of a transverse wave propagating in the thickness direction and polarizing in a circumferential direction of the pipe is examined using a transverse wave probe in addition to the above-described V scanning measurement, and the sonic velocity $V_0$ is added to Fig. 4, regression accuracy of the expression (2) is increased.

It is also possible to obtain the sonic velocity from the propagation time and the propagation distance of the ultrasonic wave in the steel pipe. In this case, however, in order to set precisely the incident point of the ultrasonic wave from the angle probe, it is necessary to obtain the velocity at each position where an echo detected by the V scanning is maximized.

In addition, while the variable angle probes are used in this example, any probe may be used so long as it can vary the incident angle, and it is possible to use a linear array-type angle probe.

Fig. 17 is a schematic diagram showing a method for performing V scanning with linear array-type angle probes.

The transmitting linear array-type angle probes 5c and 5d, and and the receiving linear array-type angle probes 5e and 5f show the same probe except that they are located at different positions, respectively. Both of the linear array-type angle probes 5c and 5e are set so that the incident angle is decreased. Both of the linear array-type angle probes 5d and 5f are set so that the incident angle is increased. Then, the measurements are carried out while varying the incident angle. The measurement method and principle are quite the same as those shown in Fig. 15 except that only a method for varying the incident angle is different.

Example 5

Fig. 18 is a diagram showing the L direction polarization and the C direction polarization of a transverse wave propagating in a thickness direction.

Fig. 19 is a diagram showing a state in which angle probes are opposed each other in parallel with the direction L to perform the V scanning.

Another example of a method for measuring refractive angle dependency of the sonic velocity of a steel pipe having acoustical anisotropy will be described with reference to Figs. 18 and 19.

First, the sonic velocity $V_{0C}$ of a transverse wave propagating in the direction of the thickness t and polarizing in the direction C, and the sonic velocity $V_{0L}$ of a transverse wave propagating in the direction of the thickness t and polarizing in the direction L as shown in Fig. 18 are obtained. In addition, the sonic velocity ratio $R = V_{0L}/V_{0C}$ is determined from these two measurement values. According to the steel pipe used in this example, $V_{0L}$ is 3218 m/s, $V_{0C}$ is 3065 m/s, and R is 1.05.

Next, two angle probes having nominal refractive angles of 70° and 60°, respectively, are opposed in parallel with the direction L to perform the V scanning, as shown in Fig. 19. Ultrasonic waves are transmitted from the transmitting angle probe 5h, ultrasonic waves are received by the receiving angle probe 5i, and the distance Y' between the angle probes at which the detection echo is maximized is determined. Then, inspection refractive angles $\theta_{L70}$ and $\theta_{L60}$ of the respective probes are obtained by the following expression (21).

$$\theta = \tan^{-1} \{Y'/(2t)\} \qquad \cdots(21)$$

In this example, the distance Y' between the angle probes is 186.4 mm, and 101.2 mm, respectively, the inspection refractive angle $\theta_{L70}$ is 76.6°, and the inspection refractive angle $\theta_{L60}$ is 66.3°, respectively.

The differences $\Delta_{70} = \theta_{L70} - \theta_{C70}$ and $\Delta_{60} = \theta_{L60} - \theta_{C60}$ between the inspection refractive angles $\theta_{C70}$ and $\theta_{C60}$ obtained by performing the V scanning while opposing the two angle probes having the nominal refractive angles of 70° and 60°, respectively, in parallel with the direction C and the above-described $\theta_{L70}$ and $\theta_{L60}$ are in relations as shown in Figs. 20 and 21 using the sonic velocity ratio R as a variable. If R is 1.05, $\Delta_{70}$ is 8.8, and $\Delta_{60}$ is 5.8 from Figs. 20 and 21. When these values and the measured refractive angles $\theta_{L70}$ of 76.6° and $\theta_{L60}$ of 66.3° are used, $\theta_{C70}$ is 67.8 and $\theta_{C60}$ is 60.5 from the relationships of $\Delta_{70} = \theta_{L70} - \theta_{C70}$ and $\Delta_{60} = \theta_{L60} - \theta_{C60}$.

From the inspection refractive angles $\theta_{C70}$ and $\theta_{C60}$ in the C direction, the incident angle $\theta_{WEDGE}$ of the angle probe, and the sonic velocity $V_{WEDGE}$ of the wedge, the sonic velocity $V_\theta$ in the direction of the inspection refractive angle can be obtained using the Snell's law of the following expression (22).

$$\mathrm{SIN}(\theta)/V_\theta = \mathrm{SIN}(\theta_{WEDGE})/V_{WEDGE} \qquad \cdots(22)$$

Substituting θ of $\theta_{C70}$= 67.8°, $\theta_{WEDGE}$ of 52.58°, and $V_{WEDGE}$ of 2730 m/s in the expression (22) yields $V_{67.8}$ of 3180 m/s, and substituting θ of $\theta_{C60}$ = 60.5°, $\theta_{WEDGE}$ of 52.58°, and $V_{WEDGE}$ of 2730 m/s in the expression (22) yields $V_{60.5}$ of 3245 m/s. These two sonic velocity values and the initially obtained $V_{0C}$ of 3065 m/s are illustrated by a diagram as the sonic velocity at the refractive angle of 0°, as shown in Fig. 22. As in the case of the above Example 4, when Fig. 22 is subjected to regression by the expression (2), the result is as shown in Fig. 4.

By the method as described above, the refractive angle dependency of the sonic velocity can be obtained.

In this example, the V scanning in the direction L is performed with two angle probes each having the nominal refractive angle. If the relationships of the differences between the refractive angles in the direction L and in the direction C as shown in Figs. 20 and 21 are obtained successively, the differences among all of the refractive angles in the direction L measured by the array-type angle probe and the variable angle SV wave angle probe as described above can be converted to the differences in the direction C, whereby the regression accuracy can be increased.

In this example, line focus-type angle probes 5j as shown in Fig. 23 can be also used, in which an oscillator is bonded on the circumference of a semicircular wedge, and the incident point of the ultrasonic wave is set as a focus. Two line focus-type angle probes 5j are disposed on a steel plate 1 having a thickness t, as shown in Fig. 24 to perform the V scanning, the distance Y between the incident points and the propagation time h are measured at positions where a transmission echo can be detected, and the sonic velocity V is obtained by the following expression (23).

$$V = [(2t)^2 + Y^2]^{1/2}/h \qquad \cdots(23)$$

In addition, the refractive angle showing the direction of propagation in this case can be given by the following expression (24).

$$\theta = TAN^{-1} \{Y/(2t)\} \qquad \cdots(24)$$

Cosequently, by measuring the sonic velocity at various positions using line focus-type angle probes, the refractive angle dependency of the sonic velocity can be obtained.

## Claims

1. A method of ultrasonic inspection for inspecting a planar defect, existing in a plane including a radial direction and an axial direction in a welded part that exists in an axial direction of a steel pipe (1), using angle probes attached to the outer peripheral surface of the steel pipe (1), **characterized in that**
an inspection refractive angle of an ultrasonic wave entered into the steel pipe (1) from the angle probes is set to an angle at which the ultrasonic wave enters the planar defect (4) perpendicularly based on the ratio of the thickness (t) to the outer diameter (D) of the steel pipe (1).

2. The method according to Claim 1, **characterized in that** the inspection refractive angle θ of the ultrasonic wave is calculated by the following expression using the thickness t and the outer diameter D of the steel pipe (1):

$$\theta = SIN^{-1} [1 - (t/D)].$$

3. The method according to Claim 1 or Claim 2, **characterized in that** the incident angle of the ultrasonic wave entered into the steel pipe (1) from the angle probes is set based on the velocity characteristic depending on the propagation direction of the ultrasonic wave in acoustical anisotropy of the steel pipe (1) and the set inspection refractive angle.

4. The method according to Claim 3, **characterized in that** a width of an oscillator in the angle probe (5) is set based on the contraction rate of the oscillator obtained from the relationship between the set incident angle and the set inspection refractive angle.

5. A method, according to Claim 1, comprising the steps of:

   measuring refractive angle dependency of the sonic velocity in advance for each steel type and rolling condition;
   storing the data in a storage device;
   automatically calculating an incident angle corresponding to a refractive angle used in the inspection using the data of the refractive angle dependency at the time of inspection; and
   selecting angle probes (5) having the calculated incident angle.

6. A method, according to Claim 1, comprising the steps of:

   measuring refractive angle dependency of the sonic velocity in advance for each steel type and rolling condition;
   storing the data in a storage device;
   automatically calculating an inspection refractive angle corresponding to the incident angle of the angle probe to be used and the sonic velocity in the angle probe using the data of the refractive angle dependency at the time of inspection; and
automatically calculating a setting position of the angle probe from the calculated inspection refractive angle.

**7.** The method according to Claim 5 or Claim 6, **characterized by** further comprising the steps of:

disposing two variable angle probes (5a, 5b) or array-type angle probes (5d-5f) to oppose each other on the outer peripheral surface of the steel pipe (1) with the same incident angle;
V scanning;
repeating several times the measurement of the sonic velocity at the position where the maximum echo is obtained by varying the incident angle; and
measuring the refractive angle dependency of the sonic velocity.

**8.** The method according to Claim 5 or Claim 6, **characterized by** further comprising the steps of:

disposing two variable angle probes (5a, 5b) or array-type angle probes (5d-5f) to oppose each other on the outer peripheral surface of the steel pipe (1) with the same incident angle and with a distance corresponding to the inspection refractive angle;
V scanning;
measuring the incident angle to detect the maximum echo by varying the incident angle;
repeating several times the measurement of the sonic velocity using the Snell's law by varying the inspection refractive angle; and
measuring the refractive angle dependency of the sonic velocity.

**9.** The method according to Claim 5 or Claim 6, **characterized by** further comprising the steps of:

disposing two line focus-type angle probes (5a, 5b) each having an oscillator bonded on the circumference of a semicircular wedge and setting an emergent point of ultrasonic wave as a focus to oppose each other on the outer peripheral surface of the steel pipe (1);
V scanning; and
measuring the refractive angle dependency of the sonic velocity by measuring the sonic velocity at the position where a transmission echo can be detected.

**10.** The method according to Claim 5 or Claim 6, **characterized in that** the refractive angle dependency of the sonic velocity in the direction C (direction perpendicular to a rolling direction) is measured from the sonic velocity ratio of two transverse waves propagating in a thickness direction and having different planes of polarization and the refractive angle dependency of the sonic velocity of SV wave propagating in the direction L (rolling direction).

**11.** The method according to Claim 5 or Claim 6, **characterized in that** the refractive angle dependency of the sonic velocity is subjected to regression by a periodic function of $\pi/2$ or $\pi$ and stored in the storage device.

**12.** An apparatus of ultrasonic inspection for inspecting a planar defect, existing in a plane including a radial direction and an axial direction in a welded part that exists in an axial direction of a steel pipe, using angle probes attached to the outer peripheral surface of the steel pipe, **characterized by** comprising:

an inspection refractive angle calculation means (41) for calculating an inspection refractive angle of an ultrasonic wave entered into the steel pipe from the angle probes (5) based on the ratio of the thickness to the outer diameter of the steel pipe (1);
a distance calculation means (14) for calculating a distance between the planar defect (4) and the angle probes (5) by the inspection refractive angle calculated by the inspection refractive angle calculated by the inspection refractive angle calculation means and the outer diameter; and
an angle probe supporting mechanism (15) for supporting the angle probe (5) at a position corresponding to the distance between the planar defect (4) and the angle probes (5) calculated by the distance calculation means.

**13.** The apparatus according to Claim 12, **characterized by** further comprising:

an incident angle calculation means (38) for calculating the incident angle of the ultrasonic wave (6) in the angle probes (5) relative to the steel pipe (1) based on the velocity characteristic of the ultrasonic wave (6) depending on the propagation direction due to acoustical anisotropy of the steel pipe and the calculated inspection refractive angle; and
an oscillator width calculation means for calculating a width of an oscillator (18) in the angle probes (5) based on the contraction ratio of the oscillator obtained from the relationship between the calculated incident angle and the calculated inspection refractive angle.

**14.** The apparatus according to Claim 12 or Claim 13, **characterized by** further comprising:

an angle probe driving means for applying a chirped pulse signal for sweeping frequencies within a predetermined pulse width to the angle probe (5) for a fixed period;
an A/D converter (25) for A/D converting an echo signal output from the angle probe (5); and
a digital filter (26) for carrying out correlation calculation of the A/D converted echo signal using the chirped pulse signal, and for outputting the calculation result as a new echo signal.

**15.** The apparatus according to Claim 12 or Claim 13, **characterized by** further comprising:

an angle probe driving means for applying a chirped pulse signal for sweeping frequencies within a predetermined pulse width to the angle probe (5) for a fixed period;
an A/D converter (25) for A/D converting an echo signal output from the angle probe (5) ; and
a synchronous average response circuit (27) for averaging the A/D converted echo signal for a plurality of periods in synchronism with the output period of the chirped pulse signal, and for outputting the averaged echo signal as a new echo signal.

**16.** The apparatus according to Claim 12 or Claim 13, **characterized by** further comprising:

an angle probe driving means for applying a chirped pulse signal for sweeping frequencies within a predetermined pulse width to the angle probe (5) for a fixed period;
an A/D converter (25) for A/D converting an echo signal output from the angle probe (5);
a digital filter (26) for carrying out correlation calculation of the A/D converted echo signal using the chirped pulse signal, and for outputting the calculation result as a new echo signal; and
a synchronous average response circuit (27) for averaging the echo signal output from the digital filter (26) for a plurality of periods in synchronism with the output period of the chirped pulse signal, and for outputting the averaged echo signal as a new echo signal.

**17.** An apparatus, according to Claim 12, comprising:

a sonic velocity distribution storage means (37) for storing refractive angle dependency of the sonic velocity for each type of the steel pipe and rolling condition;
a means (36) for inputting the steel type, the rolling condition and the inspection refractive angle; and
an incident angle calculation means (38) for calculating an incident angle from the input inspection refractive angle, the steel type, and the rolling condition using the data of the- refractive angle dependency of the sonic velocity stored in the sonic velocity distribution storage means (37).

**18.** An apparatus, according to Claim 12, comprising:

a sonic velocity distribution storage means (37) for storing refractive angle dependency of the sonic velocity for each type of the steel pipe and rolling condition;
a means (39) for inputting the steel type, the rolling condition, the incident angle or the nominal refractive angle of the angle probe, and the sonic velocity in the angle probe;
a means (40) for inputting the size of the steel pipe;
a refractive angle calculation means (41) for calculating an inspection refractive angle from the input steel type, rolling condition, incident angle or the nominal refractive angle of the angle probe, and the sonic velocity in the angle probe using the data of the refractive angle dependency of the sonic velocity stored in the sonic velocity distribution storage means (37) ; and
an angle probe position calculation means (42) for calculating a setting position of the angle probe (5) from the calculated inspection refractive angle and the input size of the steel pipe.

**Patentansprüche**

1. Ein Ultraschall-Inspektionsverfahren zum Inspizieren eines in einer Fläche vorhandenen Flächendefekts, der eine radiale Richtung und eine axiale Richtung in einem geschweißten Stück enthält, das in einer axialen Richtung einer Stahlröhre (1) vorhanden ist, unter Verwendung von Winkelprüfköpfen, die an der äußeren Umfangsfläche der Stahlröhre (1) angebracht sind, **dadurch gekennzeichnet, dass**
ein Inspektionsbeugungswinkel einer Ultraschallwelle, die in die Stahlröhre (1) von den Winkelprüfköpfen eingetreten ist, auf einen Winkel eingestellt wird, bei dem die Ultraschallwelle in den Flächendefekt (4) senkrecht eintritt, basierend auf dem Verhältnis der Dicke (t) zu dem Außendurchmesser (D) der Stahlröhre (1).

2. Das Verfahren nach Anspruch 1, **dadurch gekennzeichnet, dass** der Inspektionsbeugungswinkel θ der Ultraschallwelle berechnet wird durch die folgende Gleichung unter Verwendung der Dicke t und des Außendurchmessers D der Stahlröhre (1):

$$\theta = \mathrm{SIN}^{-1}\,[1 - (t/D)].$$

3. Das Verfahren nach Anspruch 1 oder Anspruch 2, **dadurch gekennzeichnet, dass** der Eintrittswinkel der Ultraschallwelle, die in die Stahlröhre (1) von den Winkelprüfköpfen eingetreten ist, eingestellt wird basierend auf der Geschwindigkeitscharakteristik, die von der Ausbreitungsrichtung der Ultraschallwelle in einer akustischen Anisotropie der Stahlröhre (1) und dem eingestellten Inspektionsbeugungswinkel abhängt.

4. Das Verfahren nach Anspruch 3, **dadurch gekennzeichnet, dass** eine Breite eines Oszillators in dem Winkelprüfkopf (5) basierend auf der Kontraktionsrate des Oszillators eingestellt wird, die aus de Beziehung zwischen dem eingestellten Eintrittswinkel und dem eingestellten Inspektionsbeugungswinkel erhalten wird.

5. Das Verfahren nach Anspruch 1, die Schritte umfassend:

   Messen der Beugungswinkelabhängigkeit der Schallgeschwindigkeit im Voraus für jeden Stahltyp und jede Rollbedingung;
   Speichern der Daten in einer Speichervorrichtung;
   automatisches Berechnen eines Eintrittswinkel entsprechend einem Beugungswinkel, der bei der Inspektion verwendet wird, unter Verwendung der Daten der Beugungswinkelabhängigkeit zur Zeit der Inspektion; und
   Auswählen von Winkelprüfköpfen (5), die den berechneten Eintrittswinkel aufweisen.

6. Das Verfahren nach Anspruch 1, die Schritte umfassend:

   Messen der Beugungswinkelabhängigkeit der Schallgeschwindigkeit im Voraus für jeden Stahltyp und jede Rollbedingung;
   Speichern der Daten in einer Speichervorrichtung; automatisches Berechnen eines Inspektionsbeugungswinkels entsprechend dem Eintrittswinkel des zu verwendenden Winkelprüfkopfes und der Schallgeschwindigkeit in dem Winkelprüfkopf unter Verwendung der Daten der Beugungswinkelabhängigkeit zur Zeit der Inspektion; und
   automatisches Berechnen einer Einstellungsposition des Winkelprüfkopfs aus dem berechneten Inspektionsbeugungswinkel.

7. Das Verfahren nach Anspruch 5 oder Anspruch 6, **gekennzeichnet durch** weiteres Umfassen der Schritte:

   Anordnen von zwei variablen Winkelprüfköpfen (5a, 5b) oder von Winkelprüfköpfen vom Arraytyp (5d-5f), um sich gegenseitig auf der äußeren Umfangsfläche der Stahlröhre (1) mit den gleichen Eintrittswinkeln gegenüber zu stehen;
   Abtasten von V;
   mehrmaliges Wiederholen der Messung der Schallgeschwindigkeit bei der Position, wo das maximale Echo erhalten wird, **durch** Variieren des Eintrittswinkels; und
   Messen der Beugungswinkelabhängigkeit der Schallgeschwindigkeit.

8. Das Verfahren nach Anspruch 5 oder Anspruch 6, **gekennzeichnet durch** weiteres Umfassen der Schritte:

Anordnen von zwei variablen Winkelprüfköpfen (5a, 5b) oder von Winkelprüfköpfen vom Arraytyp (5d-5f), um sich gegenseitig auf der äußeren Umfangsfläche der Stahlröhre (1) mit den gleichen Eintrittswinkel und mit einer dem Inspektionsbeugungswinkel entsprechenden Distanz gegenüber zu stehen;
Abtasten von V;
Messen des Eintrittswinkels zum Detektieren des maximalen Echos **durch** Variieren den Eintrittswinkels;
mehrfaches Wiederholen der Messung der Schallgeschwindigkeit unter Verwendung des Snelliussches Gesetzes **durch** Variieren des Inspektionsbeugungswinkels; und
Messen der Beugungswinkelabhängigkeit der Schallgeschwindigkeit.

**9.** Das Verfahren nach Anspruch 5 oder Anspruch 6, **gekennzeichnet durch** weiteres Umfassen der Schritte:

Anordnen von zwei Winkelprüfköpfen vom Zeilenfokustyp (5a, 5b), wobei jeder einen Oszillator aufweist, der an dem Umfang eines Halbleiterkeils geklebt ist, und Einstellen eines Emergenzpunktes von Ultraschallwellen als ein Fokus, um sich gegenseitig auf der äußeren Umfangsfläche der Stahlröhre (1) gegenüber zu stehen;
Abtasten von V;
Messen der Beugungswinkelabhängigkeit der Schallgeschwindigkeit **durch** Messen der Schallgeschwindigkeit bei der Position, wo ein Transmissionsecho detektiert werden kann.

**10.** Das Verfahren nach Anspruch 5 oder Anspruch 6, **dadurch gekennzeichnet, dass** die Beugungswinkelabhängigkeit der Schallgeschwindigkeit in der Richtung C (Richtung senkrecht zu einer Rollrichtung) gemessen wird aus dem Schallgeschwindigkeitsverhältnis von zwei Transversalwellen, die in einer Dickenrichtung propagieren und die unterschiedliche Polarisationsebenen aufweisen, und der Beugungswinkelabhängigkeit der Schallgeschwindigkeit der SV-Welle, die in L-Richtung (Rollrichtung) propagiert.

**11.** Das Verfahren nach Anspruch 5 oder Anspruch 6, **dadurch gekennzeichnet, dass** die Beugungswinkelabhängigkeit der Schallgeschwindigkeit Regression unterworfen ist durch eine periodische Funktion von $\pi/2$ oder $\pi$ und in der Speichervorrichtung gespeichert ist.

**12.** Eine Ultraschall-Inspektionsvorrichtung zum Inspizieren eines in einer Fläche vorhandenen Flächendefekts, der eine radiale Richtung und eine axiale Richtung in einem geschweißten Stück enthält, das in einer axialen Richtung einer Stahlröhre vorhanden ist, unter Verwendung von Winkelprüfköpfen, die an der äußeren Umfangsfläche der Stahlröhre angebracht sind, **gekennzeichnet durch** Umfassen:

eine Inspektionsbeugungswinkel-Berechnungseinrichtung (41) zum Berechnen eines Inspektionsbeugungswinkels einer Ultraschallwelle, die von den Winkelprüfköpfen (5) in die Stahlröhre eingetreten ist, basierend auf dem Verhältnis der Dicke zu dem Außendurchmesser der Stahlröhre (1);
eine Distanzberechnungseinrichtung (14) zum Berechnen einer Distanz zwischen einem Flächendefekt (4) und den Winkelprüfköpfen (5) durch den Inspektionsbeugungswinkel, der **durch** die Inspektionsbeugungswinkel-Berechnungseinrichtung und den Außendurchmesser berechnet wird; und
ein Winkelprüfkopfhaltemechanismus (15) zum Halten des Winkelprüfkopfs (5) an einer Position, die der Distanz zwischen dem Flächendefekt (4) und den Winkelprüfköpfen (5) entspricht, die **durch** die Distanzberechnungseinrichtung berechnet wird.

**13.** Die Vorrichtung nach Anspruch 12, **gekennzeichnet durch** weiteres Umfassen:

einer Eintrittswinkel-Berechnungseinrichtung (38) zum Berechnen des Eintrittswinkels der Ultraschallwelle (6) in die Winkelprüfköpfe (5) relativ zu der Stahlröhre (1) basierend auf der Geschwindigkeitscharakteristik der Ultraschallwelle (6), die von der Ausbreitungsrichtung abhängt aufgrund von akustischer Anisotropie der Stahlröhre, und dem berechneten Inspektionsbeugungswinkel; und
einer Oszillatorbreiten-Berechnungseinrichtung zum Berechnen einer Breite eines Oszillators (18) in den Winkelprüfköpfen (5) basierend auf dem Kontraktionsverhältnis des Oszillators, das erhalten wird aus der Beziehung zwischen dem berechneten Eintrittswinkel und dem berechneten Inspektionsbeugungswinkel.

**14.** Die Vorrichtung nach Anspruch 12 oder Anspruch 13, **gekennzeichnet durch** weiteres Umfassen:

einer Winkelprüfkopfantriebseinrichtung zum Anwenden eines gechirpten Pulssignals zum Abtasten von Frequenzen innerhalb einer vorbestimmten Pulsbreite für dem Winkelprüfkopf (5) für eine feste Periode;
einen A/D-Konverter (25) zum A/D-Konvertieren eines Echosignals, das von der Winkelprüfkopf (5) ausgegeben wird; und
ein Digitalfilter (26) zum Ausführen einer Korrelationsberechnung des A/D-konvertierten Echosignals unter Verwendung des gechirpten Pulssignals und zum Ausgeben des Berechnungsergebnisses als ein neues Echosignal.

15. Die Vorrichtung nach Anspruch 12 oder Anspruch 13, **gekennzeichnet durch** weiteres Umfassen:

einer Winkelprüfkopfantriebseinrichtung zum Anwenden eines gechirpten Pulssignals zum Abtasten von Frequenzen innerhalb einer vorbestimmten Pulsbreite für dem Winkelprüfkopf (5) für eine feste Periode;
einen A/D-Konverter (25) zum A/D-Konvertieren eines Echosignals, das von der Winkelprüfkopf (5) ausgegeben wird; und
ein Synchron-Durchschnitts-Reaktionsschaltkreis (27) zum Mitteln des A/D-konverierten Echosignals für eine Vielzahl von Perioden synchron mit der Ausgabeperiode des gechirpten Pulssignals und zum Ausgeben des gemittelten Echosignals als ein neues Echosignal.

16. Die Vorrichtung nach Anspruch 12 oder Anspruch 13, **gekennzeichnet durch** weiteres Umfassen:

einer Winkelprüfkopfantriebseinrichtung zum Anwenden eines gechirpten Pulssignals zum Abtasten von Frequenzen innerhalb einer vorbestimmten Pulsbreite für dem Winkelprüfkopf (5) für eine feste Periode;
einen A/D-Konverter (25) zum A/D-Konvertieren eines Echosignals, das von der Winkelprüfkopf (5) ausgegeben wird; und
ein Digitalfilter (26) zum Ausführen einer Korrelationsberechnung des A/D-konvertierten Echosignals unter Verwendung des gechirpten Pulssignals und zum Ausgeben des Berechnungsergebnisses als ein neues Echosignal; und
ein Synchron-Durchschnitts-Reaktionsschaltkreis (27) zum Mitteln des von dem Digitalfilter (26) ausgegebenen Echosignals für eine Vielzahl von Perioden synchron mit der Ausgabeperiode des gechirpten Pulssignals und zum Ausgeben des gemittelten Echosignals als ein neues Echosignal.

17. Eine Vorrichtung nach Anspruch 12, umfassend:

eine Schallgeschwindigkeitsverteilungs-Speichereinrichtung (37) zum Speichern der Beugungswinkelabhängigkeit der Schallgeschwindigkeit für jeden Typ der Stahlröhre und Rollbedingung;
eine Einrichtung (36) zum Eingeben des Stahltyps, der Rollbedingung und des Inspektionsbeugungswinkels; und
eine Eintrittswinkelberechnungseinrichtung (38) zum Berechnen eines Eintrittswinkels aus dem eingegebenen Inspektionsbeugungswinkel, dem Stahltyp und der Rollbedingung unter Verwendung der Daten der Beugungswinkelabhängigkeit der Schallgeschwindigkeit, die in der Schallgeschwindigkeitsverteilungs-Speichereinrichtung (37) gespeichert ist.

18. Eine Vorrichtung nach Anspruch 12, umfassend:

eine Schallgeschwindigkeitsverteilungs-Speichereinrichtung (37) zum Speichern der Beugungswinkelabhängigkeit der Schallgeschwindigkeit für jeden Typ der Stahlröhre und Rollbedingung;
eine Einrichtung (39) zum Eingeben des Stahltyps, der Rollbedingung, des Eintrittswinkels oder des nominalen Beugungswinkels des Winkelprüfkopfs und der Schallgeschwindigkeit in dem Winkelprüfkopf;
eine Einrichtung (40) zum Eingeben der Größe der Stahlröhre;
eine Beugungswinkelberechnungseinrichtung (41) zum Berechnen eines Inspektionsbeugungswinkels aus dem eingegebenen Stahltyp, der Rollbedingung, dem Eintrittswinkel oder dem nominalen Beugungswinkels des Winkelprüfkopfs und der Schallgeschwindigkeit in dem Winkelprüfkopf unter Verwendung der Daten der Beugungswinkelabhängigkeit der Schallgeschwindigkeit, die in der Schallgeschwindigkeitsverteilungs-Speichereinrichtung (37) gespeichert ist; und
eine Winkelprüfkopfpositions-Berechnungseinrichtung (42) zum Berechnen einer Einstellungsposition des Winkelprüfkopfs (5) aus dem berechneten Inspektionsbeugungswinkel und der eingegebenen Größe der Stahlröhre.

## Revendications

1. Procédé de contrôle de qualité par ultrasons pour contrôler un défaut de planéité dans un plan qui comprend une direction radiale et une direction axiale dans une pièce soudée située dans la direction axiale d'un conduit (1) en acier, en utilisant des détecteurs d'angle fixés à la surface périphérique externe du conduit (1) en acier, **caractérisé en ce que** l'angle de réfraction des ultrasons de contrôle de qualité qui ont pénétré dans le conduit (1) en acier en provenance des détecteurs d'angle est fixé à un angle auquel les ultrasons pénètrent dans le défaut de planéité (4) perpendiculairement compte tenu du rapport entre l'épaisseur (t) et le diamètre externe (D) du conduit (1) en acier.

**2.** Procédé selon la revendication 1 **caractérisé en ce que** l'angle θ de réfraction des ultrasons de contrôle de qualité est calculé par l'expression mathématique suivante en utilisant l'épaisseur t et le diamètre D externe du conduit (1) en acier :

$$\theta = SIN^{-1}\ [1 - (t/D)]$$

**3.** Procédé selon la revendication 1 ou la revendication 2, **caractérisé en ce que** l'angle d'incidence des ultrasons qui ont pénétré dans le conduit (1) en acier en provenance des détecteurs d'angle est fixé sur base de la caractéristique de vitesse qui dépend de la direction de propagation des ultrasons dans l'anisotropie acoustique du conduit (1) en acier et de l'angle de réfraction fixé pour le contrôle de qualité.

**4.** Procédé selon la revendication 3, **caractérisé en ce que** la largeur d'un oscillateur du détecteur d'angle (5) est fixée sur base du taux de contraction de l'oscillateur obtenu à partir de la relation entre l'angle d'incidence fixé et l'angle de réfraction fixé pour le contrôle de qualité.

**5.** Procédé selon la revendication 1, qui comprend les étapes qui consistent à :

mesurer à l'avance la dépendance entre l'angle de réfraction et la vitesse du son pour chaque type d'acier et les conditions particulières de laminage,
conserver les données dans un dispositif de mémoire,
calculer automatiquement l'angle d'incidence qui correspond à l'angle de réfraction utilisé au cours du contrôle de qualité en utilisant les données de dépendance de l'angle de réfraction lors du contrôle de qualité et sélectionner les détecteurs d'angle (5) qui présentent l'angle d'incidence calculé.

**6.** Procédé selon la revendication 1, qui comprend les étapes qui consistent à :

mesurer à l'avance la dépendance de l'angle de réfraction par rapport à la vitesse du son pour chaque type d'acier et les conditions particulières de laminage,
conserver les données dans un dispositif de mémoire,
calculer automatiquement l'angle de réfraction du contrôle de qualité qui correspond à l'angle d'incidence du détecteur d'angle qui doit être utilisé et à la vitesse du son dans le détecteur d'angle en utilisant les données de dépendance de l'angle de réfraction lors du contrôle de qualité et
calculer automatiquement la position de fixation du détecteur d'angle à partir de l'angle de réfraction calculé du contrôle de qualité.

**7.** Procédé selon la revendication 5 ou la revendication 6, **caractérisé en ce qu'**il comprend de plus les étapes qui consistent à :

placer deux détecteurs (5a, 5b) d'angle variable ou une batterie de détecteurs d'angle (5d-5f) opposés les uns aux autres sur la surface périphérique externe du conduit (1) en acier avec le même angle d'incidence,
balayer en V,
répéter plusieurs fois la mesure de la vitesse du son à l'emplacement où l'écho maximum est obtenu en faisant varier l'angle d'incidence et
mesurer la dépendance de l'angle de réfraction vis-à-vis de la vitesse du son.

**8.** Procédé selon la revendication 5 ou la revendication 6, **caractérisé de plus en ce qu'**il comprend les étapes qui consistent à :

placer deux détecteurs (5a, 5b) d'angle variable ou une batterie de détecteurs d'angle (5d-5f) opposés les uns aux autres sur la surface périphérique externe du conduit (1) en acier avec le même angle d'incidence et à une distance qui correspond à l'angle de réfraction du contrôle de qualité,
balayer en V,
mesurer l'angle d'incidence pour détecter l'écho maximum en faisant varier l'angle d'incidence,
répéter plusieurs fois la mesure de la vitesse du son en utilisant la loi de Snell en faisant varier l'angle de réfraction du contrôle de qualité et
mesurer la dépendance de l'angle de réfraction vis-à-vis de la vitesse du son.

**9.** Procédé selon la revendication 5 ou la revendication 6, **caractérisé de plus en ce qu'**il comprend les étapes qui consistent à :

placer deux détecteurs d'angle (5a, 5b) à foyer linéaire présentant chacun un oscillateur fixé sur la périphérie d'un biseau semi-circulaire et fixer un point de sortie des ultrasons comme foyer pour les opposer l'un à l'autre sur la surface périphérique externe du conduit (1) en acier,
balayer en V et
mesurer la dépendance de l'angle de réfraction vis-à-vis de la vitesse du son en mesurant la vitesse du son à l'emplacement où un écho de transmission peut être détecté.

**10.** Procédé selon la revendication 5 ou la revendication 6, **caractérisé en ce que** la dépendance de l'angle de réfraction vis-à-vis de la vitesse du son dans la direction C (direction perpendiculaire à la direction de laminage) est mesurée à partir du rapport entre les vitesses du son de deux ondes transversales qui se propagent dans la direction de l'épaisseur et qui présentent des plans de polarisation différents et à partir de la dépendance de l'angle de réfraction vis-à-vis de la vitesse du son de l'onde SV qui se propage dans la direction L (direction de laminage).

**11.** Procédé selon la revendication 5 ou la revendication 6, **caractérisé en ce que** la dépendance de l'angle de réfraction vis-à-vis de la vitesse du son subit une régression par une fonction dont la période vaut $\pi/2$ ou $\pi$ et est conservée dans le dispositif de mémoire.

**12.** Appareil de contrôle de qualité par ultrasons destiné à effectuer un contrôle de qualité d'un défaut de planéité qui existe dans un plan qui comprend une direction radiale et une direction axiale dans une partie soudée située dans la direction axiale d'un conduit en acier en utilisant des détecteurs d'angle fixés à la surface périphérique externe du conduit en acier, **caractérisé par**:

des moyens (41) de calcul d'angle de réfraction du contrôle de qualité, qui calculent un angle de réfraction des ultrasons de contrôle de qualité qui ont pénétré dans le conduit en acier en provenance des détecteurs d'angle (5) sur base du rapport entre l'épaisseur et le diamètre externe du conduit (1) en acier,
des moyens (14) de calcul de distance, qui calculent la distance entre le défaut de planéité (4) et les détecteurs d'angle (5) par l'angle de réfraction du contrôle de qualité calculé par les moyens de calcul d'angle de réfraction du contrôle de qualité et le diamètre externe et
un mécanisme (15) de soutien du détecteur d'angle qui soutient le détecteur d'angle (5) en une position qui correspond à la distance entre le défaut de planéité (4) et les détecteurs d'angle (5) calculés par les moyens de calcul de la distance.

**13.** Appareil selon la revendication 12, **caractérisé en ce qu'**il comprend de plus:

des moyens (38) de calcul d'angle d'incidence qui calculent l'angle d'incidence des ultrasons (6) dans les détecteurs d'angle (5) par rapport au conduit (1) en acier sur base de la caractéristique de la vitesse des ultrasons (6) qui dépend de la direction de propagation compte tenu de l'anisotropie acoustique du conduit en acier et de l'angle de réfraction calculé du contrôle de qualité et
des moyens de calcul de la largeur d'un oscillateur, qui calculent la largeur d'un oscillateur (18) des détecteurs d'angle (5) sur base du rapport de contraction de l'oscillateur obtenu à l'aide de la relation entre l'angle d'incidence calculé et l'angle de réfraction calculé du contrôle de qualité.

**14.** Appareil selon la revendication 12 ou la revendication 13, **caractérisé en ce qu'**il comprend de plus :

des moyens d'entraînement de détecteur d'angle qui appliquent pendant une durée fixe une impulsion stridulée qui balaye des fréquences dans une largeur d'impulsion prédéterminée du détecteur d'angle (5),
un convertisseur (25) A/N qui convertit en A/N la sortie de signal d'écho en utilisant l'impulsion stridulée et pour extraire le résultat du calcul comme nouveau signal d'écho.

**15.** Appareil selon la revendication 12 ou la revendication 13, **caractérisé de plus en ce qu'**il comprend:

des moyens d'entraînement de détecteur d'angle qui appliquent pendant une durée fixe une impulsion stridulée qui balaie des fréquences dans une largeur d'impulsion prédéterminée du détecteur d'angle (5),
un convertisseur (25) A/N qui convertit en A/N la sortie de signal d'écho provenant du détecteur d'angle (5) et
un circuit synchrone (27) de réponse moyenne qui forme la moyenne sur plusieurs périodes du signal d'écho converti en A/N en synchronisation avec la période de sortie de l'impulsion stridulée et qui extrait la moyenne du signal d'écho comme nouveau signal d'écho.

**16.** Procédé selon la revendication 12 ou la revendication 13, **caractérisé de plus en ce qu'**il comprend :

des moyens d'entraînement de détecteur d'angle qui appliquent pendant une durée fixe une impulsion stridulée qui balaie les fréquences sur une largeur d'impulsion prédéterminée du détecteur d'angle (5),
un convertisseur (25) A/N qui convertissent en A/N une sortie de signal d'écho provenant du détecteur d'angle (5),
un filtre numérique (26) qui effectue un calcul de corrélation du signal d'écho converti en A/N en utilisant l'impulsion stridulée et qui extraient le résultat du calcul comme nouveau signal d'écho et
un circuit synchrone (27) de réponse moyenne qui forme la moyenne de la sortie du signal d'écho du filtre numérique (26) sur plusieurs périodes en synchronisation avec la période de sortie de l'impulsion stridulée et qui extrait la moyenne du signal d'écho comme nouveau signal d'écho.

**17.** Appareil selon la revendication 12, comprenant:

des moyens (37) de mémorisation de la distribution de la vitesse du son qui conservent en mémoire la dépendance de l'angle de réfraction vis-à-vis de la vitesse du son pour chaque type de conduit en acier et les conditions particulières de laminage,
des moyens (36) d'introduction du type d'acier, des conditions de laminage et de l'angle de réfraction du contrôle de qualité et
des moyens (38) de calcul d'angle d'incidence qui calculent l'angle d'incidence à partir de l'angle d'incidence d'entrée du contrôle de qualité, du type d'acier et des conditions de laminage en utilisant les données de la dépendance de l'angle de réfraction vis-à-vis de la vitesse du son conservées dans les moyens (37) de mémorisation de la distribution de la vitesse du son.

**18.** Appareil selon la revendication 12, comprenant :

des moyens (37) de mémorisation de la distribution de la vitesse du son qui conservent en mémoire la dépendance de l'angle de réfraction vis-à-vis de la vitesse du son pour chaque type de conduit en acier et chaque type de conditions de laminage,
des moyens (39) d'introduction du type d'acier, des conditions de laminage, de l'angle d'incidence ou de l'angle de réfraction nominal du détecteur d'angle et de la vitesse du son dans le détecteur d'angle,
des moyens (40) d'introduction de la taille du conduit en acier,
des moyens (41) de calcul de l'angle de réfraction qui calculent l'angle de réfraction du contrôle de qualité à partir du type d'acier introduit, des conditions de laminage introduites, de l'angle d'incidence introduit, de l'angle de réfraction nominal introduit du détecteur d'angle et de la vitesse du son dans le détecteur d'angle en utilisant les données de la dépendance de l'angle de réfraction vis-à-vis de la vitesse du son conservée en mémoire dans les moyens (37) de mémorisation de distribution de la vitesse du son et
des moyens (42) de calcul de la position du détecteur d'angle qui calculent la position de placement du détecteur d'angle (5) à partir de l'angle de réfraction calculé du contrôle de qualité et de la taille introduite du conduit en acier.

FIG. 1(a)

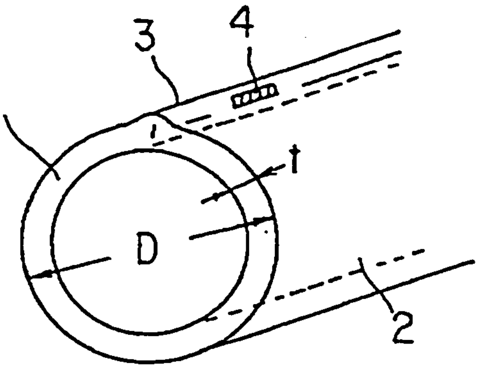


FIG. 1(b)

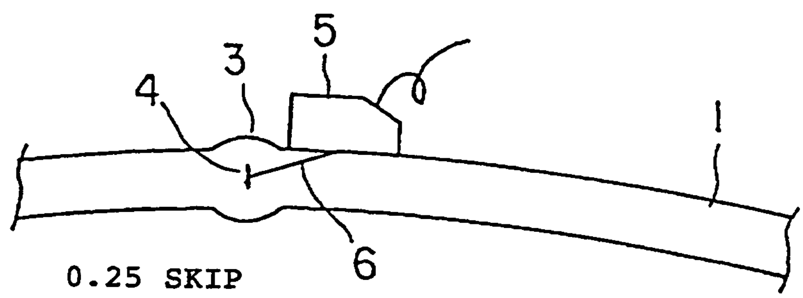


FIG. 1(c)

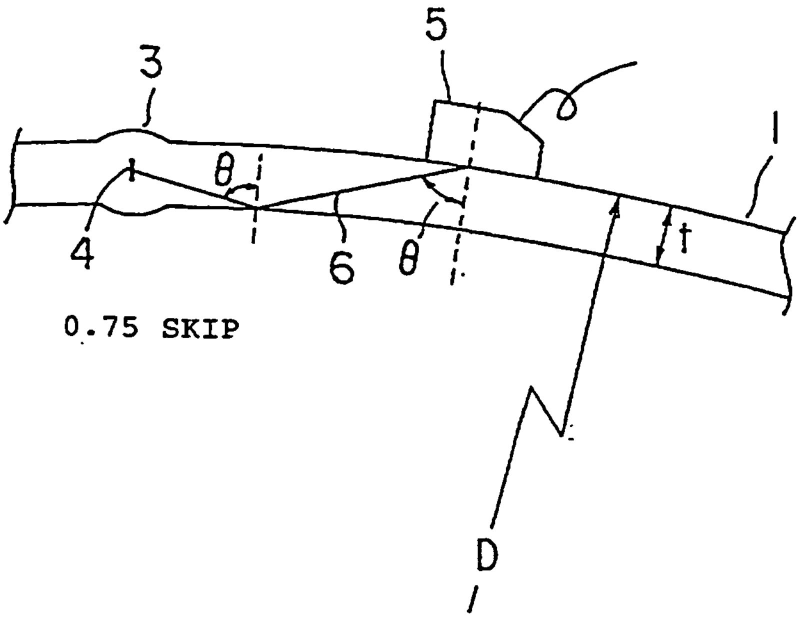

FIG. 2

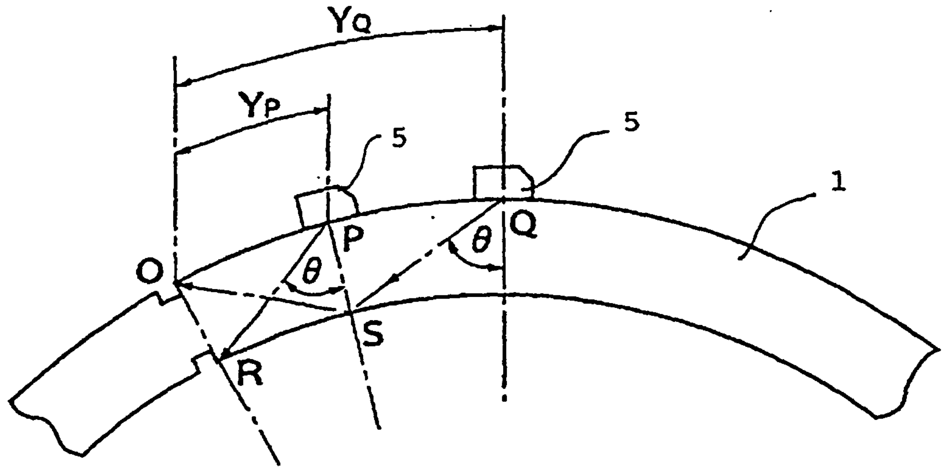

YQ
YP
5
5
1
O
P
Q
θ
θ
S
R


FIG. 3

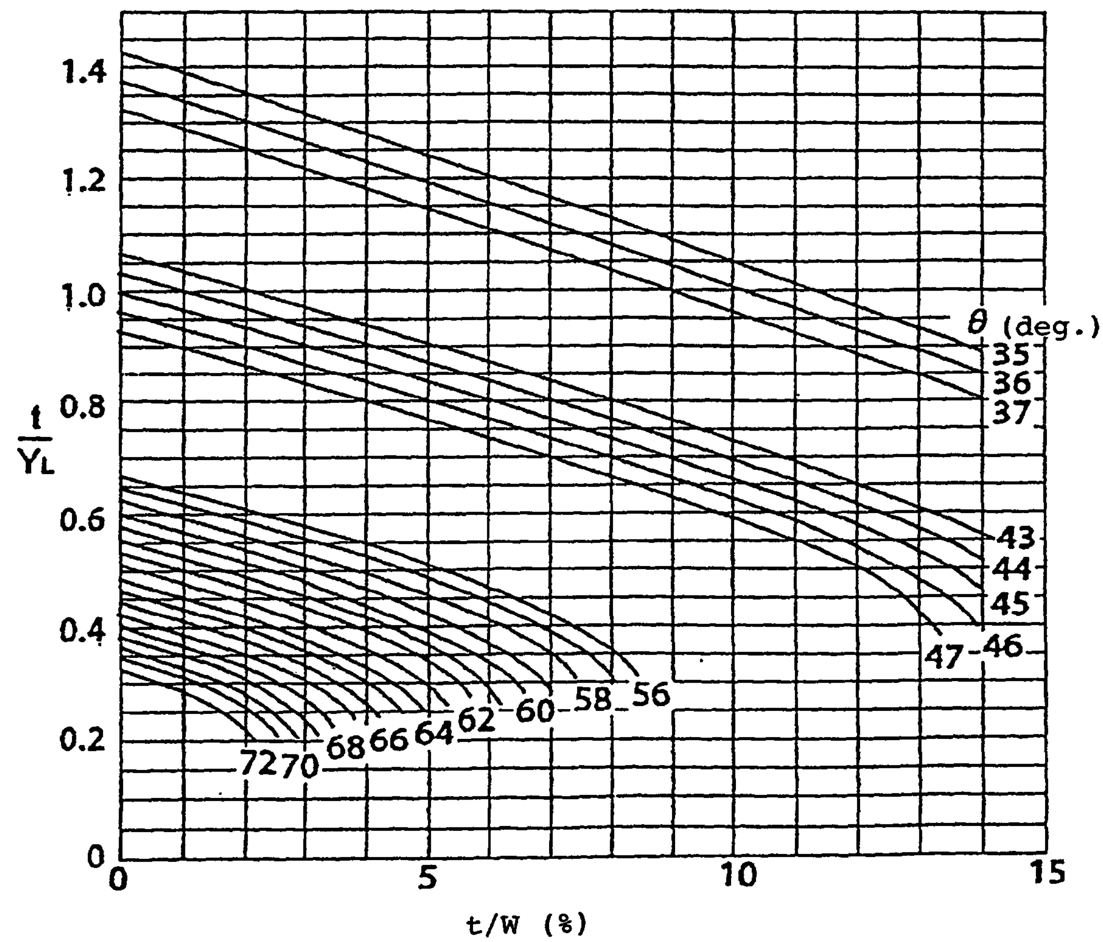

1.4
1.2
1.0
0.8
0.6
0.4
0.2
0
t / YL
θ (deg.)
35
36
37
43
44
45
46
47
56
58
60
62
64
66
68
70
72
0
5
10
15
t/W (%)

FIG. 4

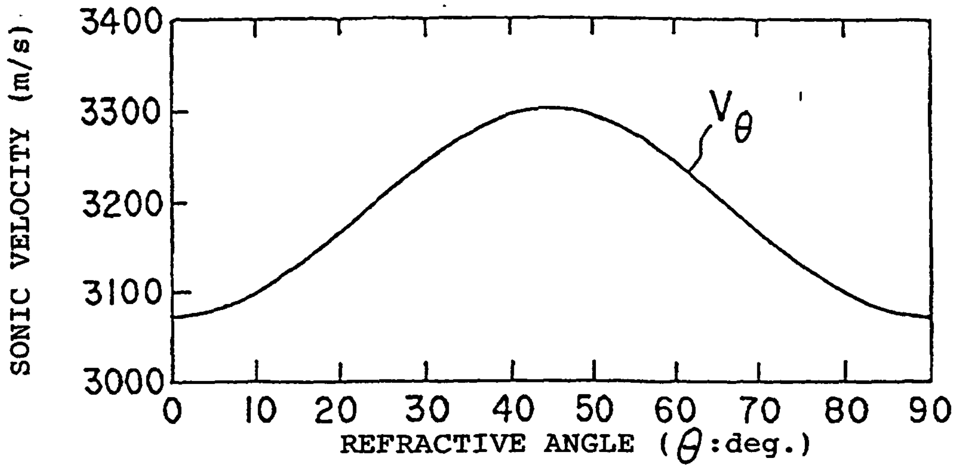
3400
3300
3200
3100
3000
SONIC VELOCITY (m/s)
$V_\theta$
0 10 20 30 40 50 60 70 80 90
REFRACTIVE ANGLE (θ:deg.)

FIG. 5

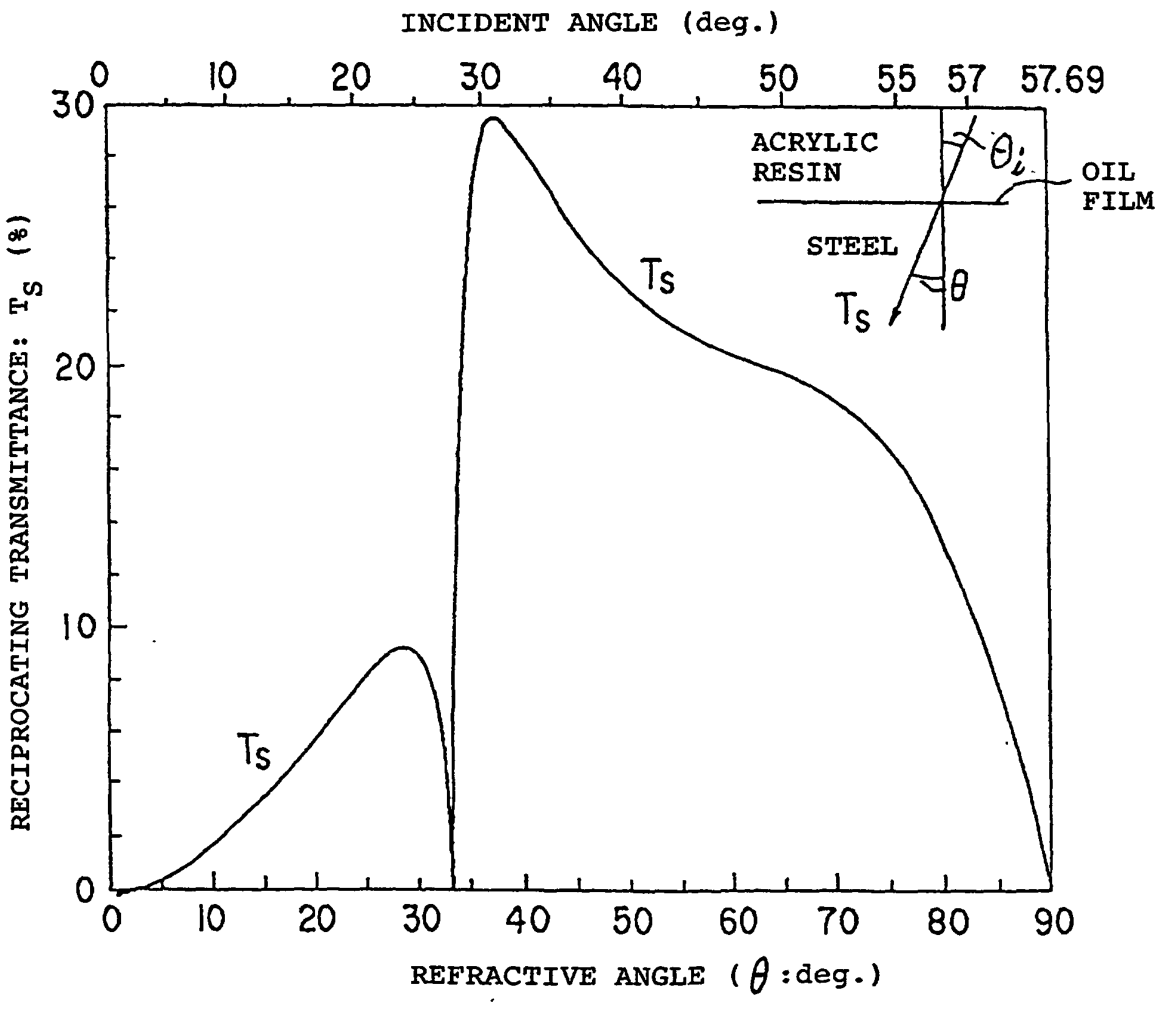
INCIDENT ANGLE (deg.)
0 10 20 30 40 50 55 57 57.69
30
20
10
0
RECIPROCATING TRANSMITTANCE: $T_S$ (%)
ACRYLIC
RESIN
OIL
FILM
STEEL
$\theta_i$
θ
$T_S$
$T_S$
$T_S$
0 10 20 30 40 50 60 70 80 90
REFRACTIVE ANGLE (θ:deg.)

FIG. 6

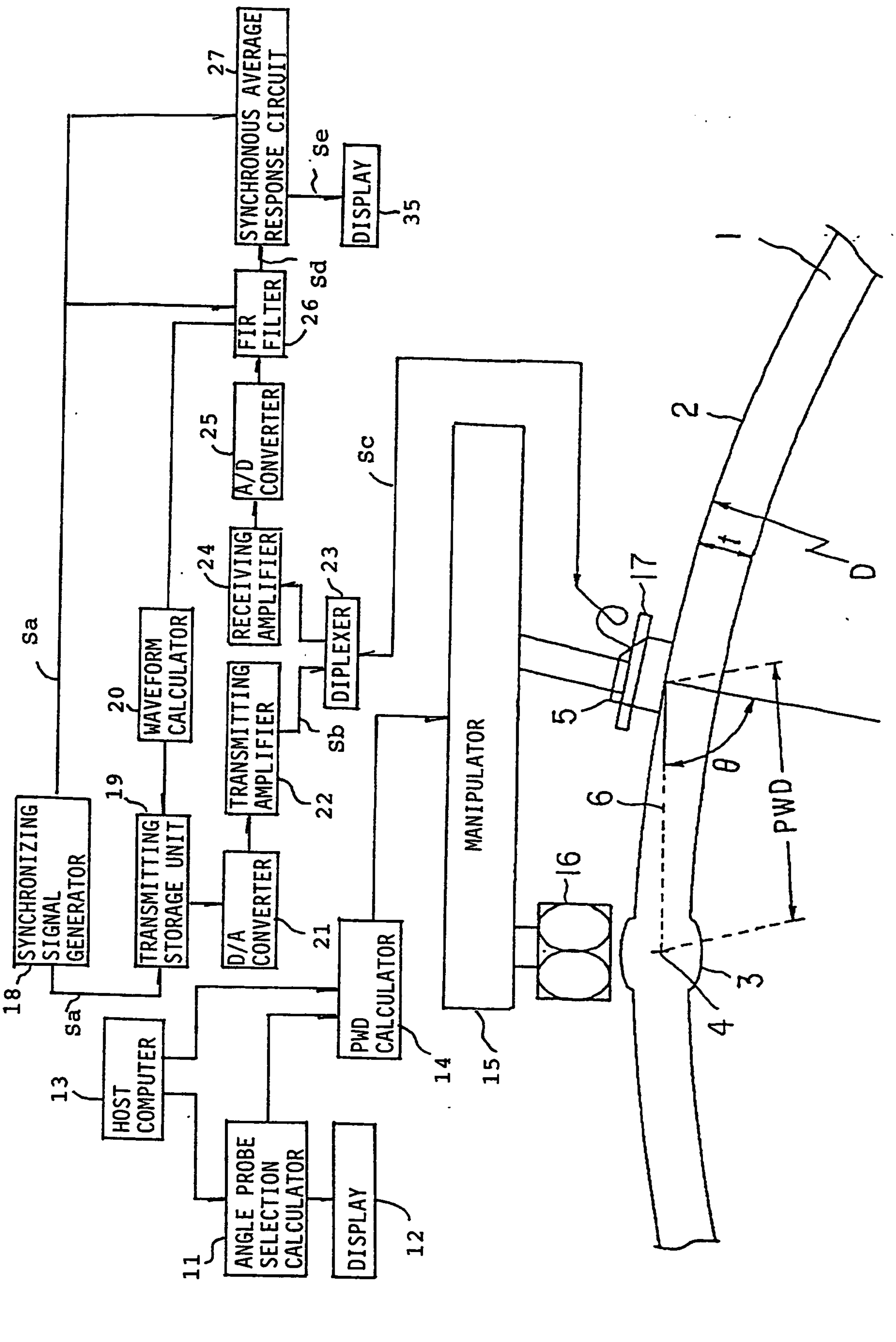
SYNCHRONIZING SIGNAL GENERATOR
18
Sa
TRANSMITTING STORAGE UNIT
19
WAVEFORM CALCULATOR
20
D/A CONVERTER
21
TRANSMITTING AMPLIFIER
22
Sb
DIPLEXER
23
RECEIVING AMPLIFIER
24
A/D CONVERTER
25
FIR FILTER
26
Sd
SYNCHRONOUS AVERAGE RESPONSE CIRCUIT
27
Se
DISPLAY
35
Sc
HOST COMPUTER
13
PWD CALCULATOR
14
ANGLE PROBE SELECTION CALCULATOR
11
DISPLAY
12
MANIPULATOR
15
16
17
5
6
θ
PWD
3
4
2
1
t
D

FIG. 7

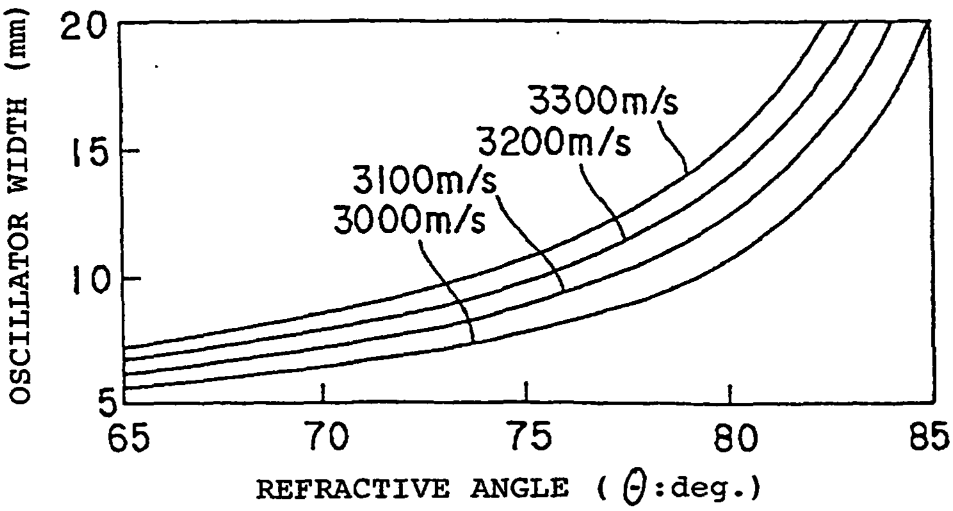


FIG. 8

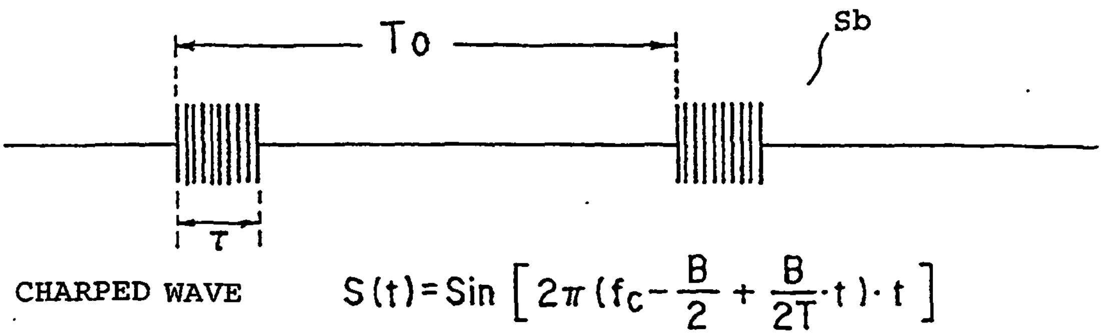


CHARPED WAVE

$$S(t)=\mathrm{Sin}\left[2\pi\left(f_C-\frac{B}{2}+\frac{B}{2T}\cdot t\right)\cdot t\right]$$

$$0<t<T$$

FIG. 9

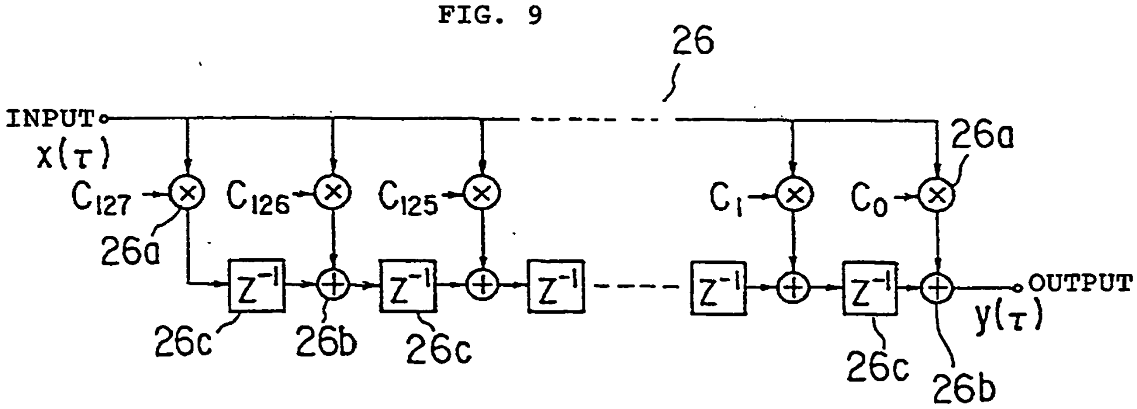
26
INPUT
x(τ)
C127
C126
C125
C1
C0
26a
26a
Z-1
26c
26b
26c
26c
26b
OUTPUT
y(τ)

FIG. 10

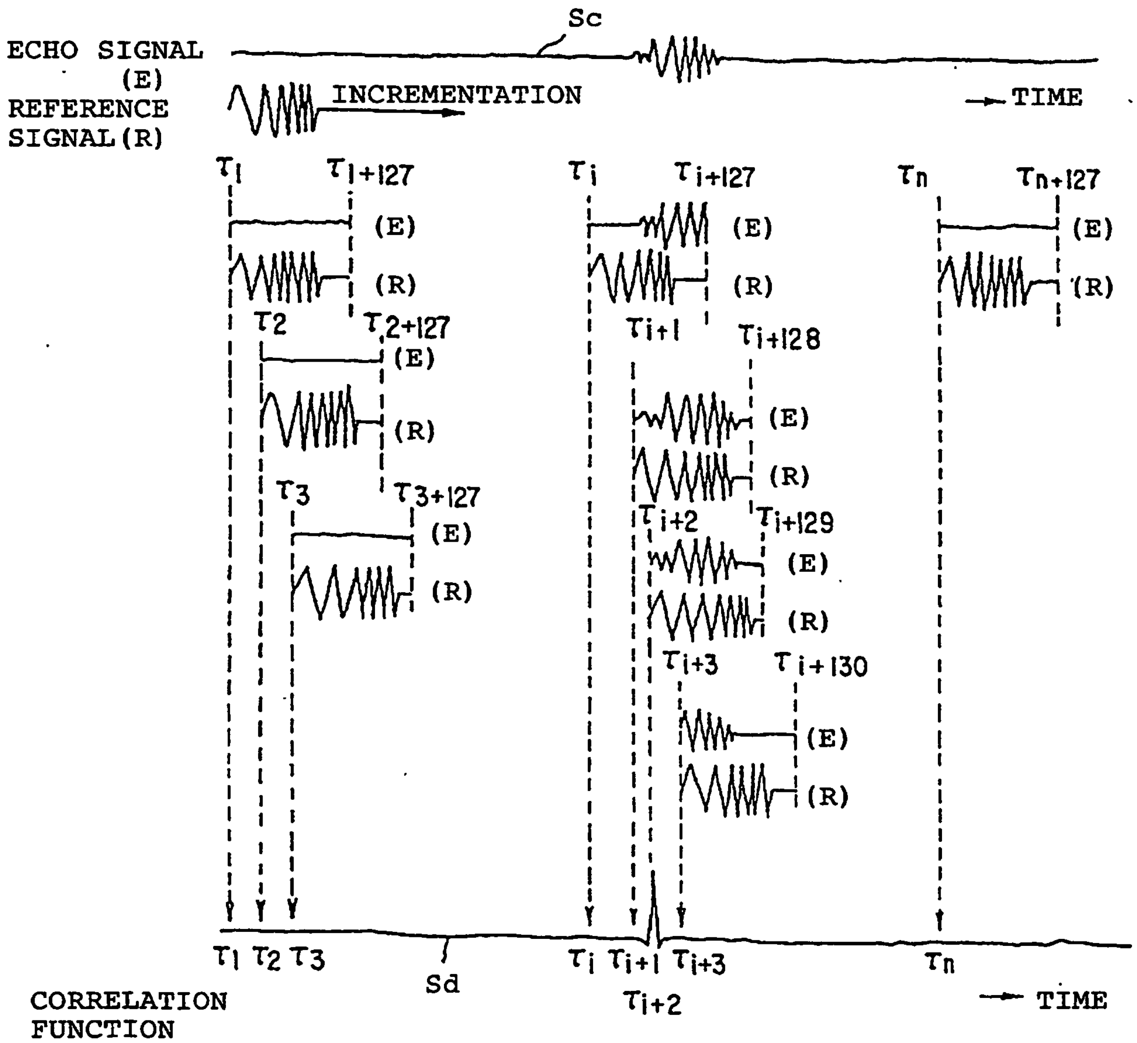
ECHO SIGNAL (E)
Sc
REFERENCE SIGNAL (R)
INCREMENTATION
TIME
τ1
τ1+127
(E)
(R)
τ2
τ2+127
τ3
τ3+127
τi
τi+127
τi+1
τi+128
τi+2
τi+129
τi+3
τi+130
τn
τn+127
τ1 τ2 τ3
Sd
τi τi+1 τi+3
τi+2
τn
CORRELATION FUNCTION
TIME

FIG. 11

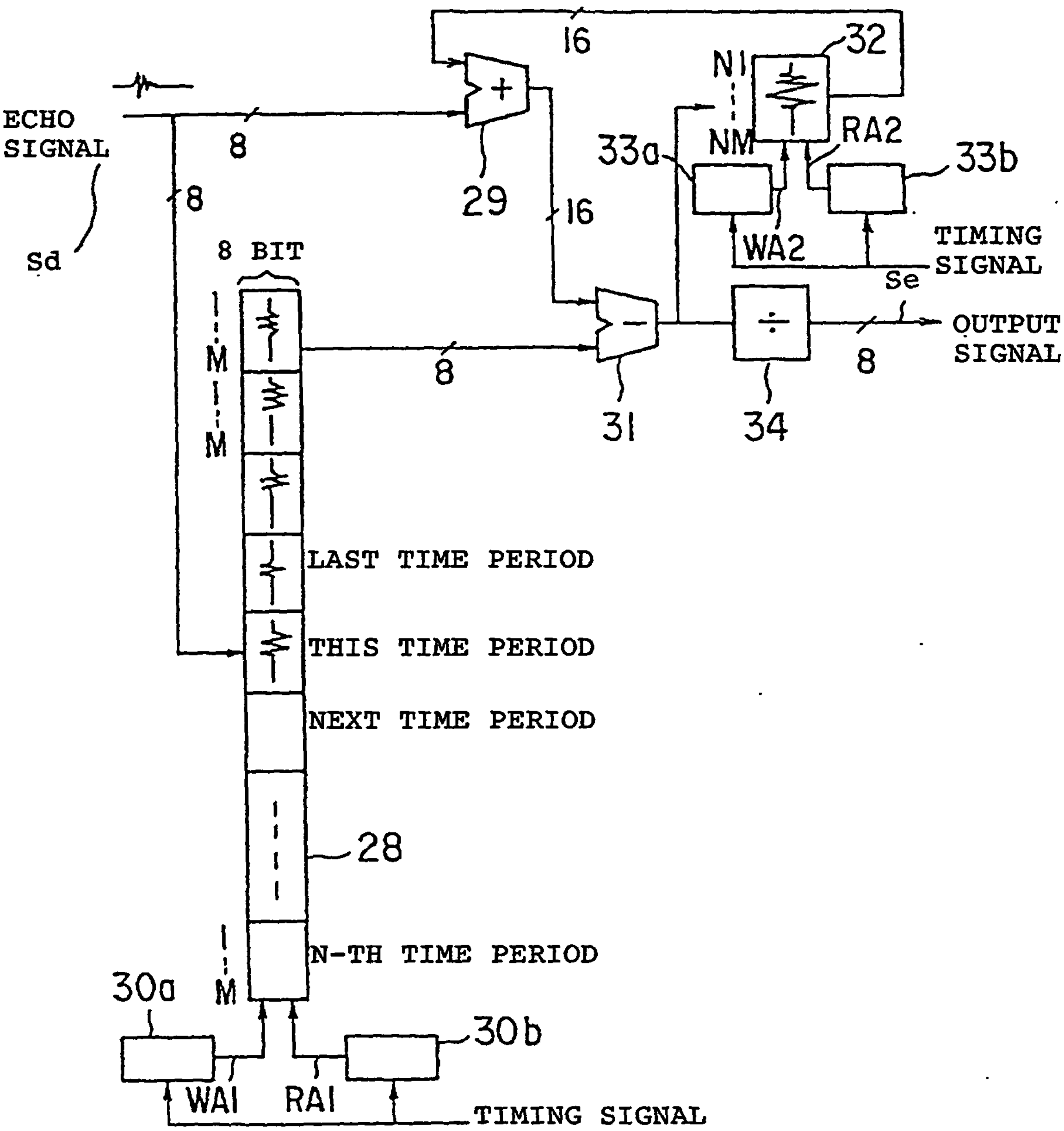
ECHO SIGNAL
Sd
8
8
8 BIT
M
M
M
16
29
16
32
N1
NM
RA2
33a
33b
WA2
TIMING SIGNAL
Se
OUTPUT SIGNAL
8
8
31
34
LAST TIME PERIOD
THIS TIME PERIOD
NEXT TIME PERIOD
28
N-TH TIME PERIOD
30a
30b
WA1
RA1
TIMING SIGNAL

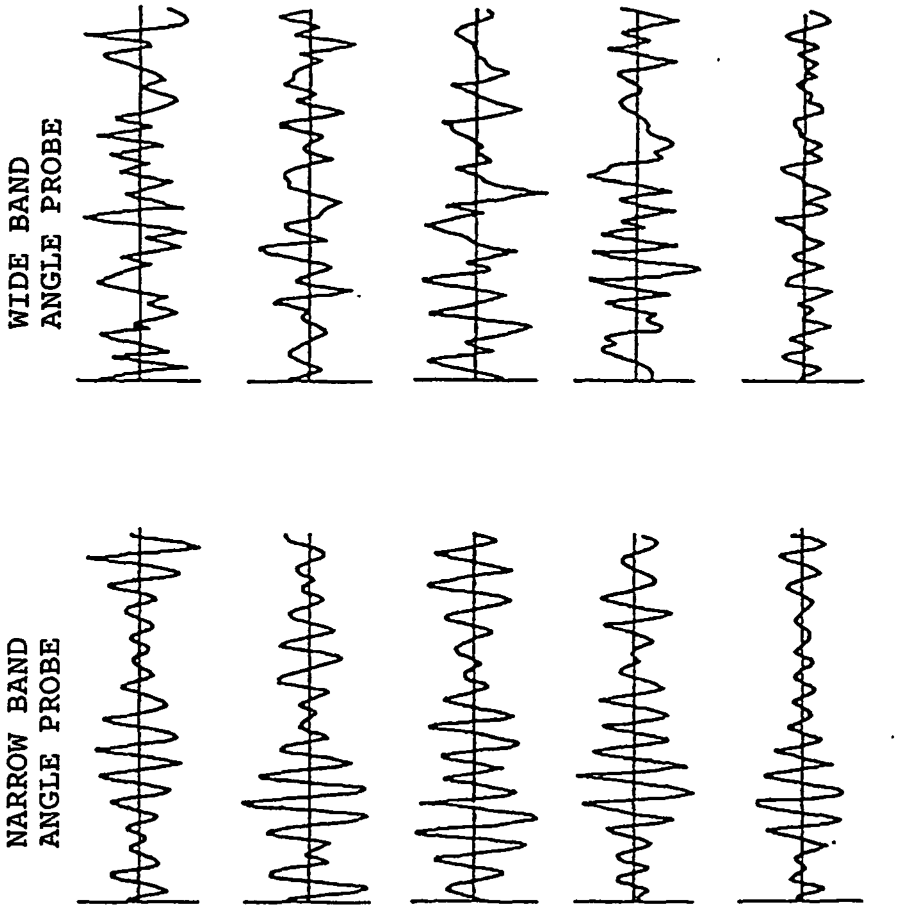


FIG. 12(a)

FIG. 12(b)

FIG. 12(c)

FIG. 12(d)

FIG. 12(e)

FIG. 13

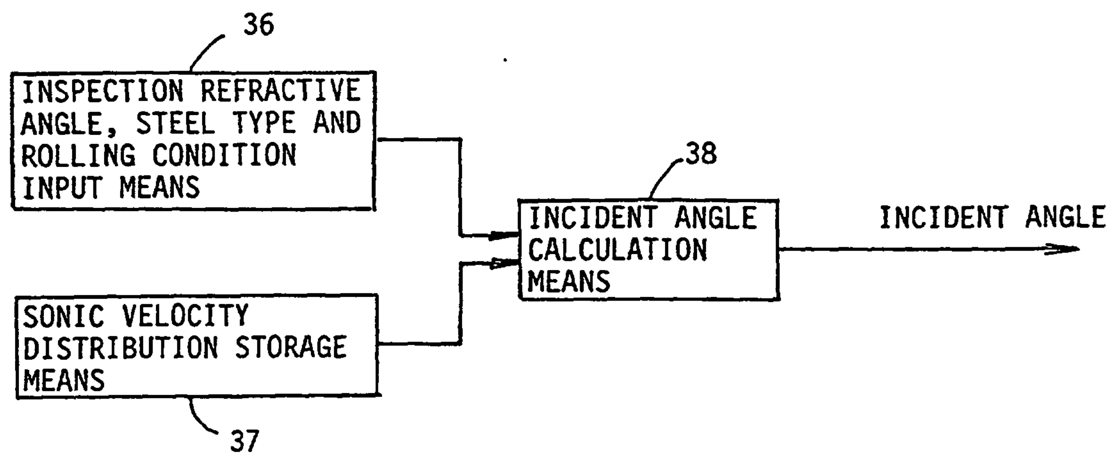
36
INSPECTION REFRACTIVE ANGLE, STEEL TYPE AND ROLLING CONDITION INPUT MEANS
38
INCIDENT ANGLE CALCULATION MEANS
INCIDENT ANGLE
SONIC VELOCITY DISTRIBUTION STORAGE MEANS
37

FIG. 14

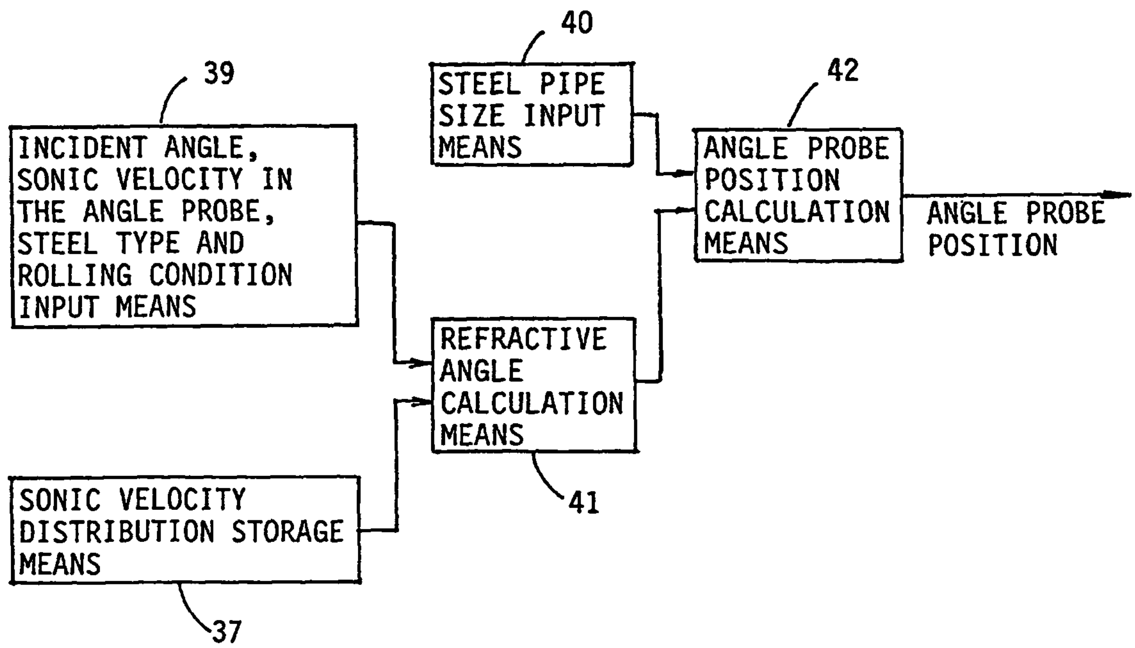
40
STEEL PIPE SIZE INPUT MEANS
39
INCIDENT ANGLE, SONIC VELOCITY IN THE ANGLE PROBE, STEEL TYPE AND ROLLING CONDITION INPUT MEANS
42
ANGLE PROBE POSITION CALCULATION MEANS
ANGLE PROBE POSITION
REFRACTIVE ANGLE CALCULATION MEANS
41
SONIC VELOCITY DISTRIBUTION STORAGE MEANS
37

FIG. 15

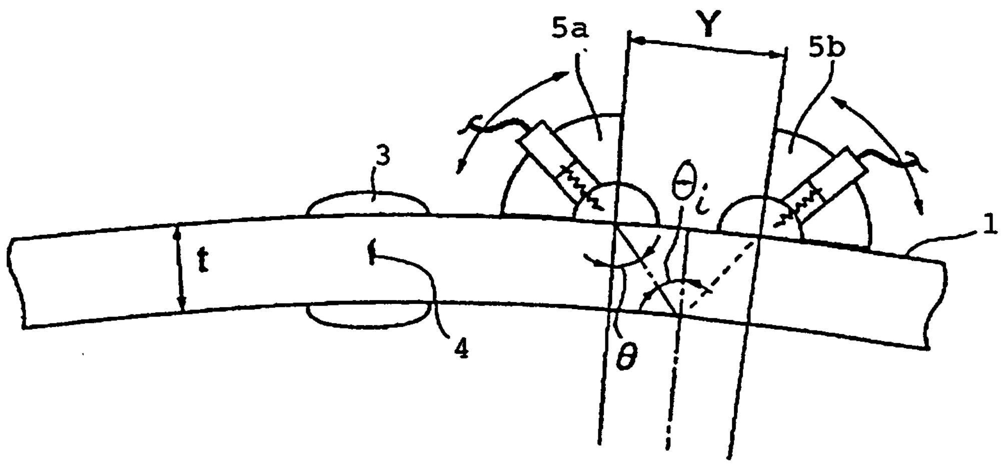
5a
Y
5b
3
θi
1
t
4
θ

FIG. 16

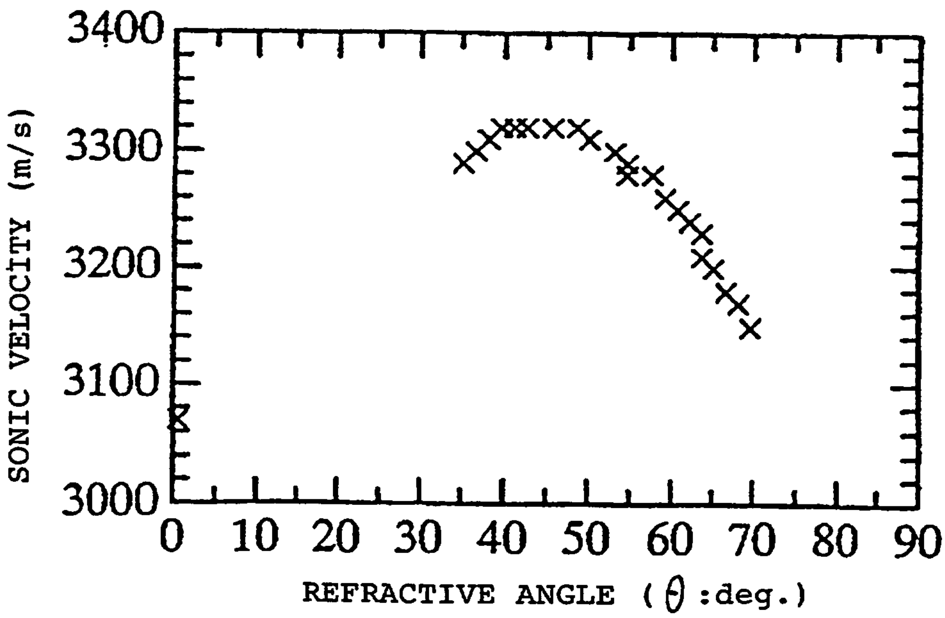
3400
3300
3200
3100
3000
SONIC VELOCITY (m/s)
0 10 20 30 40 50 60 70 80 90
REFRACTIVE ANGLE (θ:deg.)

FIG. 17

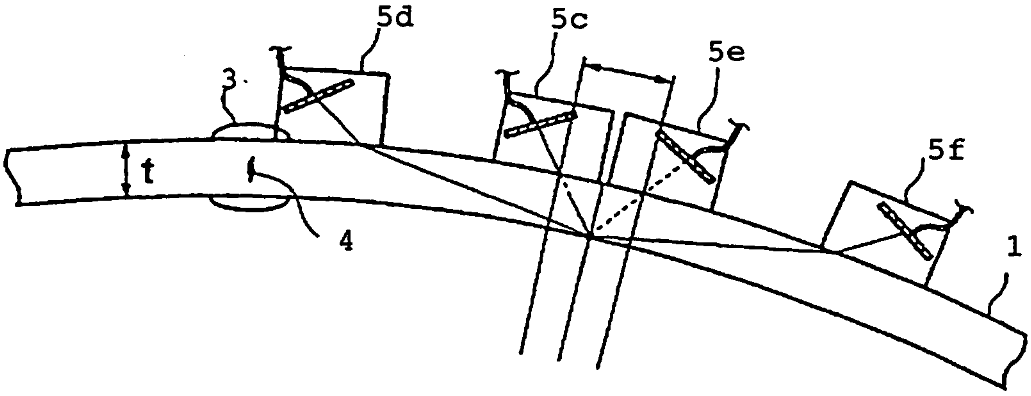


FIG. 18

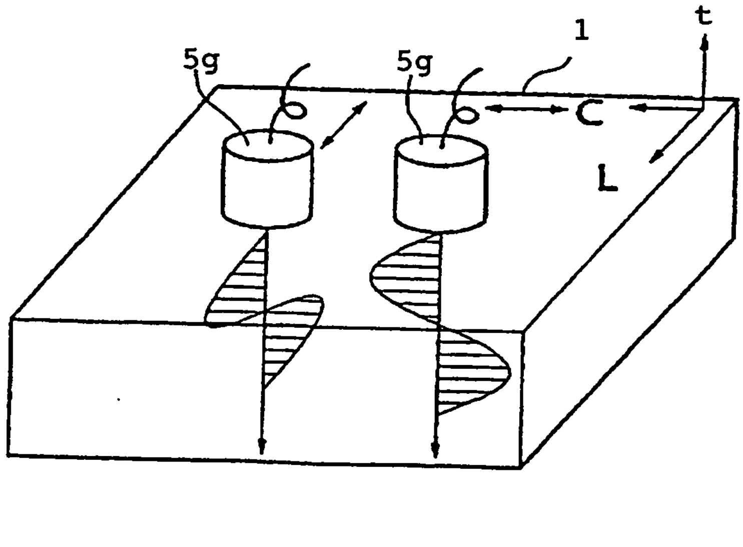

FIG. 19

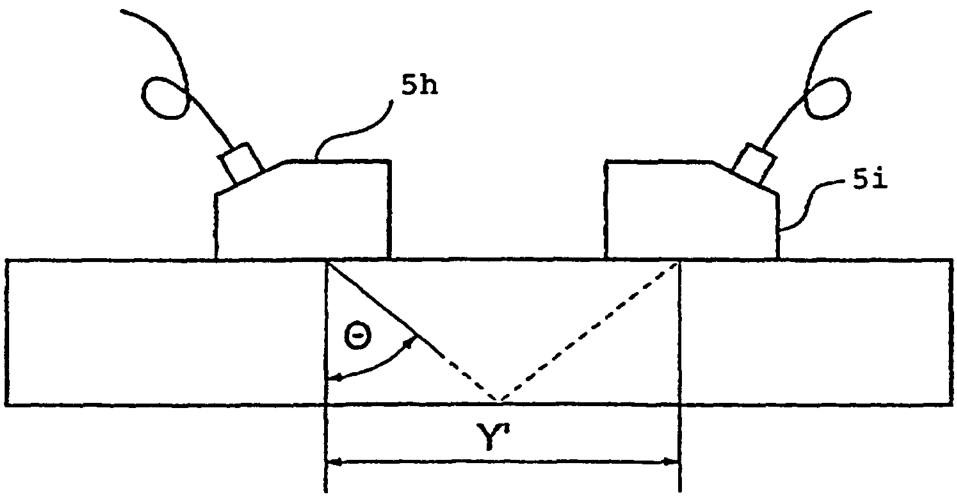
5h
5i
Θ
Y'

FIG. 20

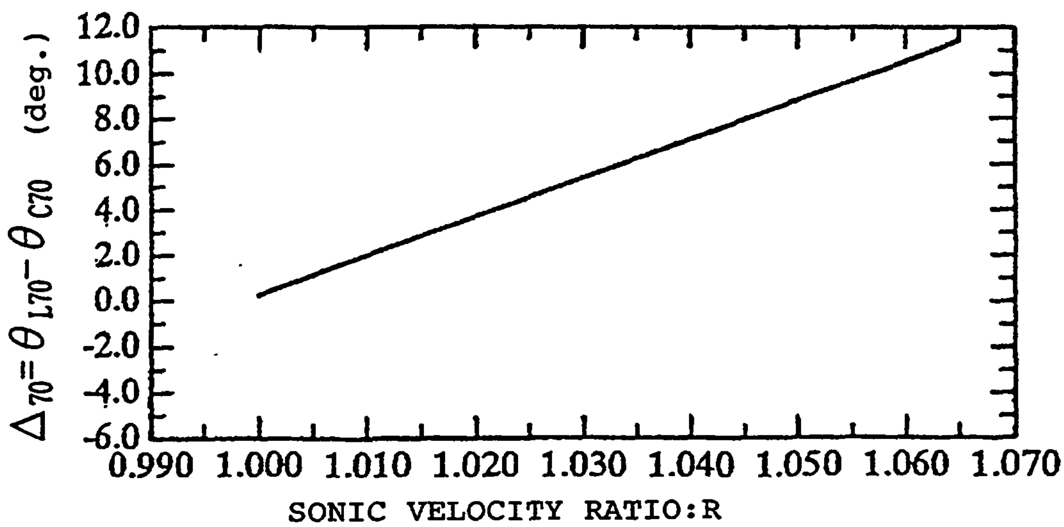
$\Delta_{70} = \theta_{L70} - \theta_{C70}$ (deg.)
12.0
10.0
8.0
6.0
4.0
2.0
0.0
-2.0
-4.0
-6.0
0.990 1.000 1.010 1.020 1.030 1.040 1.050 1.060 1.070
SONIC VELOCITY RATIO:R

FIG. 21

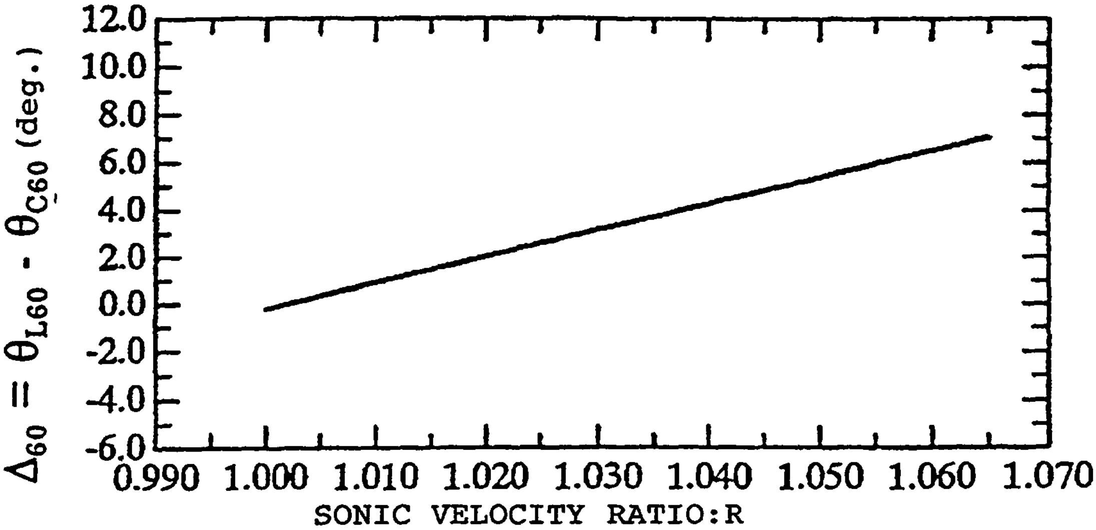
12.0
10.0
8.0
6.0
4.0
2.0
0.0
-2.0
-4.0
-6.0
$\Delta_{60} = \theta_{L60} - \theta_{C60}$ (deg.)
0.990 1.000 1.010 1.020 1.030 1.040 1.050 1.060 1.070
SONIC VELOCITY RATIO:R

FIG. 22

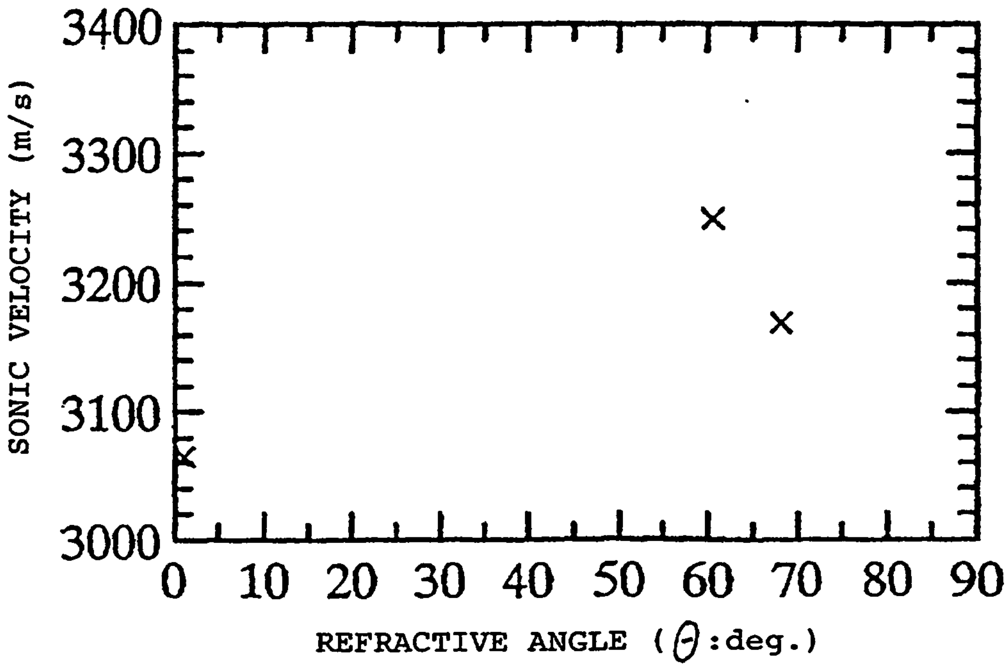
3400
3300
3200
3100
3000
SONIC VELOCITY (m/s)
0 10 20 30 40 50 60 70 80 90
REFRACTIVE ANGLE ($\theta$:deg.)

FIG. 23

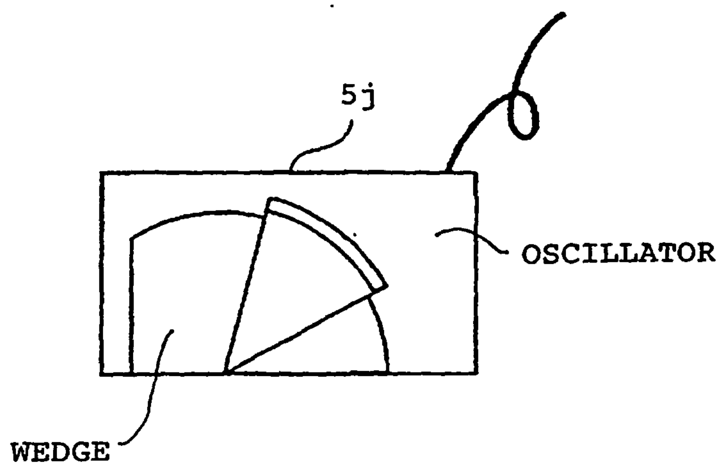


FIG. 24

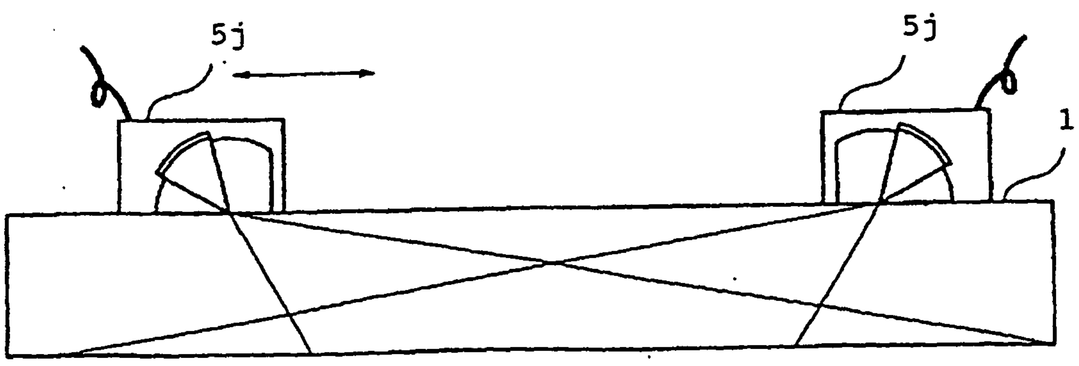

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 8261992 A
- JP 62194454 A
- JP 62192653 A
- US 4821575 A